# EUROPEAN PATENT SPECIFICATION

(11) **EP 4 154 507 B1**
(45) Date of publication and mention of the grant of the patent: **02.04.2025**
(21) Application number: 20936375.3
(22) Date of filing: 22.05.2020
(51) Int. Cl.: H04L 65/10

(54) **COMMUNICATION METHOD, MOBILE EQUIPMENT AND NETWORK ENTITY**
KOMMUNIKATIONSVERFAHREN, MOBILE VORRICHTUNG UND NETZWERKEINHEIT
PROCÉDÉ DE COMMUNICATION, ÉQUIPEMENT MOBILE ET ENTITÉ DE RÉSEAU

(43) Date of publication of application: 29.03.2023
(73) Proprietor: Vivo Mobile Communication Co., Ltd., Dongguan, Guangdong 523860 (CN)
(72) Inventor: BUCKLEY, Adrian, Tracy, California 95376 (US); KANG, Yanchao, Dongguan, Guangdong 523860 (CN)
(74) Representative: Lavoix
(86) International application number: PCT/CN2020/091909
(87) International publication number: WO 2021/232430

(56) References cited:
- EP-A1- 3 528 591
- WO-A1-2007/085691
- CN-A- 103 125 105
- US-A1- 2014 200 048
- US-A1- 2014 200 048
- US-A1- 2017 134 444
- US-A1- 2019 190 775

## Description

### TECHNICAL FIELD

The present disclosure relates to the field of communication technology, in particular to a communication method, a mobile equipment, and a network entity.

### BACKGROUND

A Subscriber Identity Module (SIM), such as a USIM, in a mobile equipment (ME) stores credentials to allow the ME for communicating with a network device. A ME may be provided with one or more SIMs, i.e., a MUSIM-capable ME. In a case that the ME is provided with two SIMs, a first SIM of the two SIMs may be configured for an Internet Protocol (IP) Multimedia Subsystem (IMS) services, and a second SIM of the two SIMs may be configured for a data service. In a case that a ME in a connected state on a second Public Land Mobile Network (PLMN) has an ongoing data service using a registration associated with the second SIM, the ME is incapable of receiving a notification (e.g. a paging message from a first PLMN) unless the ME decides to listen a paging channel associated with the first PLMN. This requires the ME to move temporarily away from the second PLMN. Such moving-away may have an adverse effect on the ongoing data service on the second PLMN, causing any unnecessary interruption of the data service in the second PLMN and wasting system resources.

Document US20170134444A1 discloses methods and systems for establishing a Session Initiation Protocol Session. One method includes transmitting a first message requesting authentication configuration information; in response to the first message, receiving a second message that includes the authentication configuration information; transmitting a third message that includes authentication information based upon the received authentication configuration information; receiving an authentication challenge request that is formatted according to the second protocol; and in response to receiving the authentication challenge request, transmitting an authentication response to the second network node.

Document EP3528591A1 discloses a method applied to a terminal that supports dual card dual active. The terminal includes a radio frequency circuit, and a first modem and a second modem that are separately coupled to the radio frequency circuit. The first modem includes a first IP multimedia subsystem IMS module, and the second modem includes a second IMS module.

### SUMMARY

An objective of the present disclosure is to provide a communication method, a mobile equipment, and a network entity according to the appended set of claims, so as to address problems in the relevant art that an unnecessary interruption of a data service for a MUSIM-capable ME may occur, a system triggering a paging message to the MUSIM-capable ME may perform an undesirable operation, and a system resources is wasted.

In a first aspect, a communication method performed a mobile equipment (ME) is provided. The method includes generating, by the ME, a first message to create a first data connection in a first Public Land Mobile Network (PLMN); performing, by the ME, a first IP Multi-Media Subsystem (IMS) registration via the first data connection with a first network entity in the first PLMN, wherein performing the first IMS registration includes: sending a first feature tag used to indicate a first access type of the first IMS registration, and a first private user identity obtained from a first Subscriber Identity Module (SIM) of the ME; generating, by the ME, a second message to create a second data connection in a second PLMN; performing, by the ME, a second IMS registration via the second data connection, wherein performing the second IMS registration includes sending a second feature tag used to indicate a second access type of the second IMS registration, and the first private user identity obtained from the first SIM; receiving a first communication message including the second feature tag from the first network entity; and receiving a message from a second network entity, wherein the first access type is different from the second access type.

In a further aspect, a communication method performed by a communication system is provided. The communication method includes receiving a first message from a mobile equipment (ME) by a first network entity to create a first data connection in a first Public Land Mobile Network (PLMN); performing, by the first network entity, a first IP Multi-Media Subsystem (IMS) registration via the first data connection of the ME, wherein performing the first IMS registration includes: receiving a first feature tag used to indicate a first access type of the first IMS registration; a first private user identity obtained from a first Subscriber Identity Module (SIM) of the ME; receiving a second message from the ME by the first network entity to create a second data connection in a second PLMN; performing a second IMS registration via the second data connection of the ME by the first network entity, wherein performing the second IMS registration includes receiving a second feature tag used to indicate a second access type of the second IMS registration; the first private user identity obtained from the first USIM of the ME; sending a first communication message including the second feature tag to the ME by the first network entity; receiving a response by the first network entity; and receiving a message from a second network entity by the ME, wherein the first access type is different from the second access type.

In a further aspect, an ME is provided. The ME includes a first data-connection-creation module, configured for generating a first message to create a first data connection in a first a first PLMN; a first IMS-registration module, configured for performing a first IMS registration via the first data connection with a first network entity in the first PLMN, wherein performing the first IMS registration includes: sending a first feature tag used to indicate a first access type of the first IMS registration, and a first private user identity obtained from a first SIM of the ME; a second data-connection-creation module, configured for generating a second message to create a second data connection in a second PLMN; a second IMS-registration module, configured for performing a second IMS registration via the second data connection, wherein performing the second IMS registration includes sending a second feature tag used to indicate a second access type of the second IMS registration, and the private user identity obtained from the first SIM; a receiving module, configured for receiving a first communication message including the second feature tag from the first network entity, and receiving a message from a second network entity, wherein the first access type is different from the second access type.

In a further aspect, an ME is provided. The ME includes a processor, a storage and a program stored in the storage and executable by the processor, wherein the program is executed by the processor to implement the communication method of the first aspect.

In a further aspect, a first network entity is provided. The first network entity includes a first communicating module and a second communicating module, wherein the first communicating module is configured for receiving a first feature tag and a first contact address from a mobile equipment (ME) in a first IMS registration of the ME, and receiving a second feature tag and a second contact address from the ME in a second IMS registration of the ME; and sending a first communication message including the second feature tag to the ME; the second communicating module is configured for sending the first feature tag and the first contact address to a second network entity using a first third-party registration; and sending the second feature tag and the second contact address to the second network entity using a second third-party registration; receiving a third session establishing message containing a first URI associated with a first USIM of the ME and sending the third session establishing message to the second network entity; receiving a fourth session establishing message including the second feature tag and the second contact address of the ME from the second network entity.

In a further aspect, a first network entity is provided. The first network entity includes a processor, a storage and a program stored in the storage and executable by the processor, wherein the program is executed by the processor to implement the communication method of the fourth aspect.

In a further aspect, a computer-readable storage medium storing thereon a program is provided. The program is executed by a processor so as to implement the communication methods above.

Through the above technical solutions of the present disclosure, it may be ensured that a majority of services that could be potentially missed in the ME would be IMS-based service for the first SIM of the ME, and no paging procedure needs to be performed, and whether the ME is in a Radio Resource Control (RRC) Inactive state or an RRC Idle state, the ME may be reached for performing a SIP communication. Thus, a system resource is saved and misleading of reachability of the ME may be prevented.

### BRIEF DESCRIPTION OF THE DRAWINGS

FIG.1 is a flowchart of a communication method performed by a mobile equipment according to some embodiments of the present disclosure;
FIG.2 is a flowchart of a registration procedure of a communication method performed by a mobile equipment according to some embodiments of the present disclosure;
FIG.3 is a flowchart of a deregistration procedure of a communication method performed by a mobile equipment according to some embodiments of the present disclosure;
FIG. 4 is a flowchart of a refresh procedure of a communication method performed by a mobile equipment according to some embodiments of the present disclosure;
FIG. 5 is a flowchart of a communication method performed by a first network entity according to some embodiments of the present disclosure;
FIG. 6 is a flowchart of a communication method performed by a second network entity according to some embodiments of the present disclosure;
FIG. 7 is a specific flow of a register procedure of a communication method according to some embodiments of the present disclosure;
FIGs. 8A and 8B are specific flows of a deregistration procedure of a communication method according to some embodiments of the present disclosure;
FIG. 9 is a specific flow of a refresh procedure of a communication method according to some embodiments of the present disclosure;
FIG. 10A is a first schematic structural diagram of a ME according to some embodiments of the present disclosure;
FIG.10B is a detailed schematic structural diagram of the ME according to some embodiments of the present disclosure;
FIG. 11 is a first schematic structural diagram of a first network entity according to some embodiments of the present disclosure;
FIG. 12 is a first schematic structural diagram of a second network entity according to some embodiments of the present disclosure;
FIG. 13 is a schematic structural diagram of a communication system according to some embodiments of the present disclosure.
FIG. 14 is a second schematic structural diagram of a ME according to some embodiments of the present disclosure;
FIG. 15 is a second schematic structural diagram of a first network entity according to some embodiments of the present disclosure;
FIG. 16 is a second schematic structural diagram of a second network entity according to some embodiments of the present disclosure; and
FIG. 17 is a block diagram showing a structure of a ME according to some embodiments of the present disclosure.

### DETAILED DESCRIPTION

Technical solutions of embodiments of the present disclosure will be clearly and completely described below in conjunction with the accompany drawings in the embodiments of the present disclosure, and it is obvious that the described embodiment are a part, rather than all, of the embodiments of the present disclosure. Based on the embodiments of the present disclosure, all other embodiments obtained by those of ordinary skill in the art without creative labor are within the protection scope of the present disclosure.

The technical solutions of the embodiments of the present disclosure can be applied to various communication systems, such as a Global System of Mobile Communication (GSM), a Code Division Multiple Access (CDMA) system, and a Wideband Code Division Multiple Access (WCDMA), a General Packet Radio Service (GPRS), a Long Term Evolution (LTE)/ Long Term Evolution Advanced (LTE-A), a Fifth-Generation (5G) New Radio (NR), and other future radio communication systems such as a sixth-generation radio communication system, a MultFire (MF) system, and the like.

A Mobile Equipment (ME) may also be called a Mobile Terminal, a Terminal Device, a User Equipment or a Mobile User Device, and the like and may communicate with one or more core networks via a radio access network (e.g., RAN (Radio Access Network)). The ME may be a terminal device such as a mobile phone (or a "cellular" phone) and a computer having the terminal device, for example, a portable device, a pocket-sized device, a handheld device, a computer-built device, a desk top box (e.g. satellite TV receiver, cable TV receiver), an Internet of Things (IoT) device (e.g. a consumer product such as washing machine, a TV, a watch, a ring, a headset, glasses etc), a transportation device (e.g. car, bicycle, motorbike etc), or an on-board mobile device, which exchange language and/or data with the radio access network.

A base station may be a Base Transceiver Station (BTS) in the GSM or the CDMA, a NodeB in the WCDMA, or an evolutional Node B (eNB or e-NodeB) in the LTE, and a 5G base station (gNB). The present disclosure are not limited to the examples.

A Session Initiation Protocol (SIP) uses Methods/Requests and corresponding Responses to communicate and establish a call session. A SIP INVITE message is used to establish a session; a SIP MESSAGE is used to transport an instant message; a SIP REGISTER message is used to communicate a user location (including, but not limited to, a host name, and an Internet Protocol (IP) address etc.). Typically, in a SIP communication, a SIP user will first REGISTER with a system, and once the user is registered, other SIP METHODS can be used.

The present disclosure provides a communication method, a mobile equipment (ME), and a network entity, which may address problems in the related art that an unnecessary interruption of a data service for a Multi-SIM-capable ME (MUSIM-capable ME or MUSIM ME) may occur, a system triggering a paging message to the MUSIM ME may perform an undesirable operation, waste a system resource, and reach misleading assumption of reachability. It should be noted that even though the term "SIM" is used, the term also encompass other equivalents such as a USIM, an eSIM, an ISIM etc, and the SIM is an entity that contains credentials and user identities and used by the ME to communicate with a network.

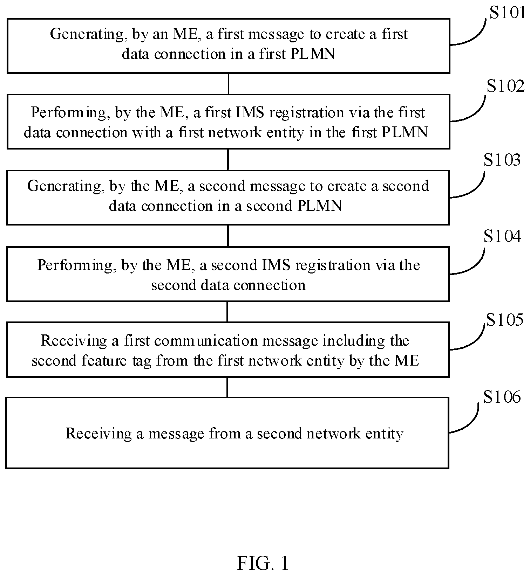

FIG. 1 is a flowchart of a communication method according to some embodiments of the present disclosure. The communication method is performed by a mobile equipment (ME). The method includes following steps S101-S106.

Step S101: generating, by the ME, a first message to create a first data connection in a first Public Land Mobile Network (PLMN).

Step S102: performing, by the ME, a first IP Multi-Media Subsystem (IMS) registration via the first data connection with a first network entity in the first PLMN, wherein performing the first IMS registration includes sending a first feature tag used to indicate a first access type of the first IMS registration, and a private user identity obtained from a first Subscriber Identity Module (SIM) of the ME.

Step S103: generating, by the ME, a second message to create a second data connection in a second PLMN.

Step S104: performing, by the ME, a second IMS registration via the second data connection, wherein performing the second IMS registration includes sending a second feature tag used to indicate a second access type of the second IMS registration, and the first private user identity obtained from the first SIM, wherein the first access type is different from the second access type.

Step S105: receiving a first communication message including the second feature tag from the first network entity.

Step S106: receiving a request from a second network entity.

The ME in the present disclosure may be provided with two or more SIMs, such as Universal Subscriber Identity Modules (USIM). One skilled in the art will appreciate that a private user identity is stored on a SIM of a ME and is read by the ME into an internal memory in the ME and the private user identity stored in the internal memory of the ME is then used for communications with the network.

In some embodiments of the present disclosure, the ME may have a first SIM and a second SIM. The first SIM may contain a first information set including a first public user identity (ID), a first private user identity (ID), a first token, and the like; the second SIM may contain a second information set including a second public user ID, a second private user ID, a second token, and the like. The first private user identity is associated with the first SIM, and the second private user identity is associated with the second SIM. Optionally, the first private user identity is obtained from the first SIM, and the second private user identity is obtained from the second SIM. Both the first private user identity and the second private user identity are stored in the internal memory of the ME and are used for communications with network, such as the first PLMN and the second PLMN, respectively.

The first PLMN may include entities in a Fifth-Generation (5G) system (5GS) including, but being not limited to, a 5G core network node (S1 node) (e.g. Access and Mobility Management Function (AMF), Session Management Function (SMF)), an N3WIF/ePDG, a User-Plane Function (UPF) entity, and an IMS system which includes, but is not limited to, a Serving Call Session Control Function (S-CSCF) entity, an Application Server (such as a Server Centralization and Continuity Application Server (SCC-AS)), and the like; or the first PLMN may include entities in a Fourth-Generation (4G) Evolved Packet Core (EPC) network including, but being not limited to, a Mobility Management Entity (MME), a Serving Gateway (SGW), a PDN (Packet Data Network) Gateway (P-GW), a Policy and Charging Rules Function (PCRF) entity, and the like. In both the 5GS and 4G, the IMS system communicates via the 5GS using the UPF and via 4G using the P-GW.

Detailed flowcharts of the communication method will be described hereinafter.

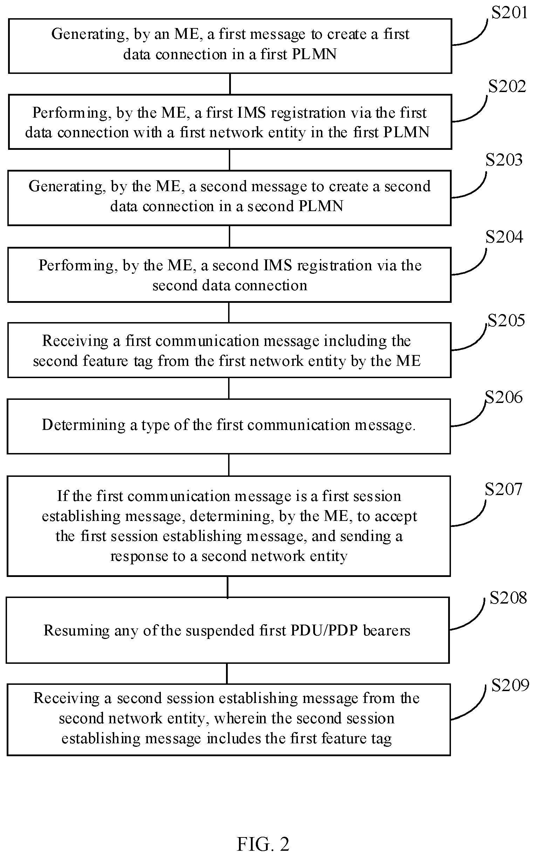

FIG. 2 is a flowchart of a register procedure of a communication method performed by a mobile equipment (ME) according to some embodiments of the present disclosure. The method includes following steps S201-S204.

Step S201: generating, by the ME, a first message to create a first data connection in a first PLMN.

The first data connection may be any bearer or session that may be used to transmit data. In the embodiments of the present disclosure, the first data connection may be a first Protocol Data Unit (PDU)/Packet Data Protocol (PDP) bearer or session.

Optionally, the Step S201 includes following substeps S201a-S201b.

S201a: performing, by the ME, a first Register procedure with a first core network node in the first PLMN using a first private user identity (ID).

In an example, the first private user identity is associated with a first SIM of the ME. Optionally, the first private user identity is obtained from the first SIM of the ME.

In an example, the first core network node may be a 5G core network node (S1 node, e.g., the AMF or the SMF) or a 4G core network node (e.g., a Mobility Management Entity (MME)).

In an example, if the first core network node is the 4G core network node, the first Register procedure may be replaced by a first Attach procedure.

S201b: establishing, by the ME, a first PDU/PDP bearer with a second core network node in the first PLMN.

In an example, the second core network node may be a first UPF (User Plane Function) entity in the 5GS in the first PLMN; in another example, the second core network node may be a first PGW in the 4G Evolved Packet Core (EPC) network in the first PLMN. One skilled in the art will appreciate that the first PDU/ PDP bearer may go through other intermediate nodes known in the 4G EPC network or the 5GS in the first PLMN.

Optionally, a type of the first PDU/PDP bearer is determined based on one or more of the parameters included in the first message. The parameters which are known for those skilled in the art are not specifically described herein.

Step S202: performing, by the ME, a first IMS registration via the first data connection with a first network entity in the first PLMN.

Performing the first IMS registration may include sending any one or any combination of, but not limited to, the first private user ID, a first public user identity, and a first feature tag to the first network entity, wherein the first feature tag is used to indicate a first access type of the first IMS registration to the first network entity.

Optionally, at least one of a first register ID (RegID) is sent to the first network entity together with a first contact address , the first private user ID and the first feature tag.

The first network entity may be a Call Session Control Function (CSCF) e.g. a Serving Call Session Control Function (S-CSCF) entity.

The first contact address may be a first IP address (IP address 1) for the first IMS registration, or other any address from which the ME may be located. The first IP address maybe self-assigned by the ME or have been provided from the second core network node. The second core network node may use other procedures to obtain the first IP address (e.g. a Dynamic Host Configuration Protocol (DHCP)) and send the first IP address to the ME in the step S201b.

The first access type of the first IMS registration may be a Third Generation Partnership Project (3GPP) access, e.g., a Cellular access.

Optionally, the step S202 may include following substeps S202a-S202c.
S202a: sending the first register ID and the first contact address to the first network entity;
S202b: receiving a first authorization token or resource token from the first network entity; and
S202c: storing the first authorization token or resource token.

Optionally, at least one of a first register ID (RegID) and a first contact address (i.e., first IP address) may be sent to the first network entity together with the sending the first private user ID and the first feature tag during the first IMS registration.

In an example, in the substep S202c, a following association relation may created and stored in the ME: an association between the first authorization token and the first private user ID, or an association among the first authorization token, the first contact address, the first RegID, and the first private user ID.

In an example, the first authorization token includes a first value, e.g. a first random number, generated by the first network entity or a fifth network entity (such as a Proxy-Call Session Control Function (P-CSCF) ) through performing a first computation using any one or more of the first register ID, the first contact address, a first URI (e.g. the first public user identity) associated with the first private user ID in the first IMS registration, and a first key known to both the first network entity or the fifth network entity and the ME. The first URI was either obtained from the first IMS registration, a first third-party registration or is already known to the first network entity or the fifth network entity that has created the first value.

Optionally, the method may further include: performing the same first computation by the ME using any one or more of the first random number, the first register ID, the first contact address, the first URI associated with the first IMS registration, and the first key; determining a first token value; and sending the first token value to the first network entity.

Optionally, the first token value is also sent to the fifth network entity.

In an example, the first key known to both the first network entity and the ME may be an existing key that is created for a security association between the ME and the first network entity in the IMS system in the first PLMN, which is a first point of contact with an IMS subsystem from the ME, maintains a security association with the ME and performs policing of messages and other policy functions, as defined in an Internet Engineering Task Force (IETF) RFC 3261.

In another example, the ME may also receive the first authorization token from another network entity, such as a Unified Data Management (UDM) entity.

Optionally, after the step S202, the method may further include suspending a part or all of the first PDU/PDP bearers.

S203: generating, by the ME, a second message to create a second data connection in a second PLMN.

The second message may include one or more of following parameters: Single Network Slice Selection Assistance Information (S-NASSAI), which is used to identify a network slice to be selected; information of requested Data Network Name (DNN) in the 5GS, which is used to indicate the UPF to be selected or information of an Access Point Name (APN) in the 4G EPC network; information of Service and Session Continuity Mode (SSC Mode). The information of the requested DNN or the information of the APN may be internet or IMS', wherein the IMS' is used to indicated an IMS control plane only.

Optionally, the Step S203 includes following substeps S203a-S203c.

S203a: performing, by the ME, a second Register procedure with a third core network node in the second PLMN using a second private user identity.

In an example, the second private user identity is associated with a second SIM of the ME.

In an example, the third core network node may be a 5G core network node (S2 node, e.g., an AMF or a SMF) or a 4G core network node (e.g. a MME).

In an example, if the third core network node is the 4G core network node, the second Register procedure may be replaced by a second Attach procedure.

S203b: establishing, by the ME, a second PDU/PDP bearer with a fourth core network node in the second PLMN.

In an example, the fourth core network node may be a second UPF in a 5GS; in another example, the fourth core network node may be a second PGW in a 4G EPC network. One skilled in the art will appreciate that the second PDU/ PDP bearer may go through other intermediate nodes known in the 4G EPC network or the 5GS in the second PLMN.

Optionally, a type of the second PDU/PDP bearer is determined based on one or more of the parameters included in the second message. The parameters which are known for those skilled in the art are not specifically described herein.

S203c: establishing a secure association with a third network entity in the first PLMN by the ME using the second PDU/PDP bearer.

Optionally, the third network entity may be a Non-3GPP InterWorking Function (N3IWF)/Enhanced Packet Data Gateway (ePDG) entity in the first PLMN.

In an example, the secure association may be a secure tunnel such as an IPSec tunnel using Transport Layer Security (TLS). An example of this type of procedure can be found in 3GPP Technical Specification (TS) 23.502 subclause 4.12 or 4.12b, TS 23.402 or TS 24.302 clause 7.2.2.

Step S204: performing, by the ME, a second IMS registration via the second data connection with the first network entity, wherein performing the second IMS registration with the first network entity includes sending any one or any combination of, but not limited to, a second feature tag used to indicate a second access type of the second IMS registration and the first private user ID, to the first network entity.

Optionally, at least one of a second register ID (RegID), a second contact address, and the first public user ID is sent to the first network entity together with the second private user ID and the second feature tag during the second IMS registration.

Optionally, at least one of a second register ID (RegID), is sent to the first network entity together with a second contact address, and the first public user ID, the second private user ID and the second feature tag during the second IMS registration through a third network entity. The second register ID is different from the first register ID.

In an example, the third network entity may be a Non-3GPP InterWorking Function (N3IWF)/Enhanced Packet Data Gateway (ePDG) entity.

The second contact address may have been assigned by the N3IWF/ePDG in the step S203c. The second contact address may be a second IP address (IP address 2) for the second IMS registration, or other any address from which the ME may be located.

In an example, the second IMS registration is performed using the created secure association.

Optionally, the first access type of the first IMS registration is different from the second access type of the second IMS registration.

In an example, the second access type is a non-3GPP access or an access from a Multi-SIM capable ME(MUSIM ME). Specifically, the non-3GPP access in the present disclosure may be a control-plane access only. One skilled in the art will appreciate that the term non-3GPP access is used for illustrative purposes and is not an absolute term.

Optionally, the step S204 may include following substeps S204a-S204b.

S204a: sending, to the first network entity by the ME, the second feature tag and the first private user ID.

S204b: receiving and storing a second authorization token sent from the first network entity.

In an example, the second authorization token includes a second value, e.g., a second random number generated by the first network entity or a fifth network entity (such as a P-CSCF) through performing a second computation using any one or more of the second register ID, the second contact address, the first URI (e.g. the first public user identity), and a second key known to both the first network entity or the fifth network entity and the ME.

Optionally, the method further includes: performing the same second computation by the ME using any one or more of the second random number, the second register ID, the second contact address, the first URI, and the second key; determining a second token value; and sending the second token value to the first network entity by the ME.

In an example, the second key known to both the first network entity or the fifth network entity and the ME may be an existing key that is created for the security association between the ME and the first network entity or the fifth network entity in the IMS system in the first PLMN.

In another example, the ME may also receive the second authorization token from another network entity, such as a UDM entity.

Optionally, after the step S204, the method further includes following steps S205-S209.

Step S205: receiving a first communication message including the second feature tag from the first network entity by the ME.

Optionally, the first communication message is received by the ME from the first network entity via the created secure association between the first network entity and the ME.

The first communication message includes the second contact address (IP address 2).

Step S206: determining a type of the first communication message by the ME.

Step S207: if the first communication message is a first session establishing message, determining, by the ME, to accept the first session establishing message, and sending a response to the first network entity to indicate that the first private user ID is used for subsequent communication between the second network entity and the ME, wherein the response includes the first contact address as the indication for subsequent communication between the second network entity and the ME.

Optionally, the response may further include one or more of the first private user ID, the first register ID, and the first feature tag.

In an example, the second network entity may be an Application Server (AS) in the 5GS or in the 4G EPC network.

Step S208: resuming any of the suspended first PDU/PDP bearers.

Optionally, resuming any of the suspended first PDU/PDP bearers may include resuming any of the suspended first PDU/PDP bearers by sending a Non-Access Stratum (NAS) message to an AMF entity.

Step S209: receiving a second session establishing message from the second network entity, wherein the second session establishing message includes the first feature tag.

Through the above steps, the ME may inform the AS that the first contact address of the ME is available for an incoming SIP INVITE message sent to the S-CSCF. Thus, it may be ensured that a majority of services that could be potentially missed in the ME would be IMS-based service for the first SIM of the ME, and no paging procedure needs to be performed, and whether the ME is in a Radio Resource Control (RRC) Inactive state or an RRC Idle state, the ME may be reached for performing a SIP communication. Thus, a system resource is saved and misleading of reachability of the ME may be prevented.

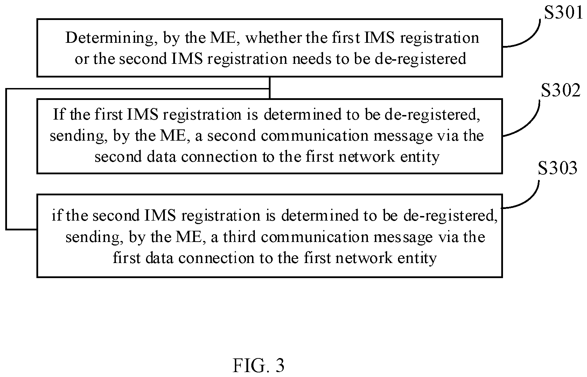

FIG. 3 is a flowchart of a deregistration procedure of a communication method performed by the ME according to some embodiments of the present disclosure. As shown in FIG.3, the deregistration procedure of the communication method according to the present disclosure includes following steps S301-S303.

Step S301: determining, by the ME, whether the first IMS registration or the second IMS registration needs to be de-registered.

Step S302: if the first IMS registration is determined to be de-registered, sending, by the ME, a second communication message via the second data connection to the first network entity, wherein the second communication message includes at least one of, but not limited to, the following: the first authorization token or resource token, the first contact address, the first register ID, the first URI, an indication of a task to be performed.

Step S303: if the second IMS registration is determined to be de-registered, sending, by the ME, a third communication message via the first data connection to the first network entity, wherein the third communication message may include at least one of the second authorization token or resource token, the second contact address, the second register ID, and an indication of a task to be performed.

In this embodiment, the indication of the task to be performed may be a de-registration task.

Through the above steps, the ME may cancel one of the first IMS Registration or the second IMS Registration when the ME no longer wants to maintain it.

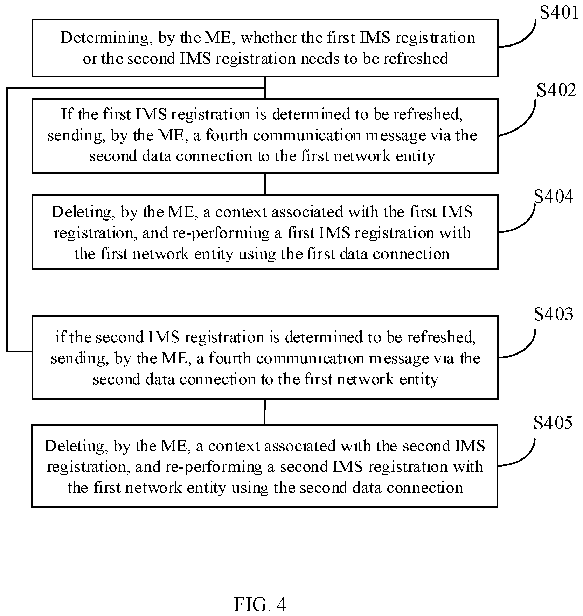

FIG. 4 is a flowchart of a refresh procedure of a communication method performed by the ME according to some embodiments of the present disclosure. As shown in FIG. 4, the refresh procedure of the communication method according to the present disclosure includes following steps S401-S403.

Step S401: determining, by the ME, whether the first IMS registration or the second IMS registration needs to be refreshed.

Step S402: if the first IMS registration needs to be refreshed, sending, by the ME, a fourth communication message via the second data connection to the first network entity, wherein the fourth communication messages includes at least one of, but being not limited to, following: an indication of a task to be performed, the first register ID, the first URI, and the first contact address.

Step S403: if the second IMS registration needs to be refreshed, sending, by the ME, a fifth communication message via the second data connection to the first network entity, wherein the fifth communication messages includes at least one of, but being not limited to, following: an indication of a task to be performed, the second register ID, the first URI, and the second contact address.

In an example, the determination on whether the first IMS registration or the second IMS registration needs to be refreshed may be made in consideration of following conditions: 1) whether one of following is received by the ME: information about the first IMS registration or the second IMS registration being expired, information about the first IMS registration or the second IMS registration not existing, information about a URI not associated with the first contact address or the second contact address, information about unauthorization of the ME to perform an action, or information about an action being not supported, or 2) whether a timer in the ME reaches a specific value.

In this embodiment, the indication of the task to be performed may be a refresh task.

In the embodiments of the present disclosure, if one of the above information is received or if the timer in the ME reaches the specific value, the ME determines that the first IMS registration or the second IMS registration needs to be refreshed. Optionally, the method further includes following steps S404-S405.

Step S404: if the first IMS registration is determined to be refreshed, deleting, by the ME, a context associated with the first IMS registration, and re-performing a first IMS registration with the first network entity using the first data connection.

Step S405: if the second IMS registration is determined to be refreshed, deleting, by the ME, a context associated with the second IMS registration, and re-performing a second IMS registration with the first network entity using the second data connection.

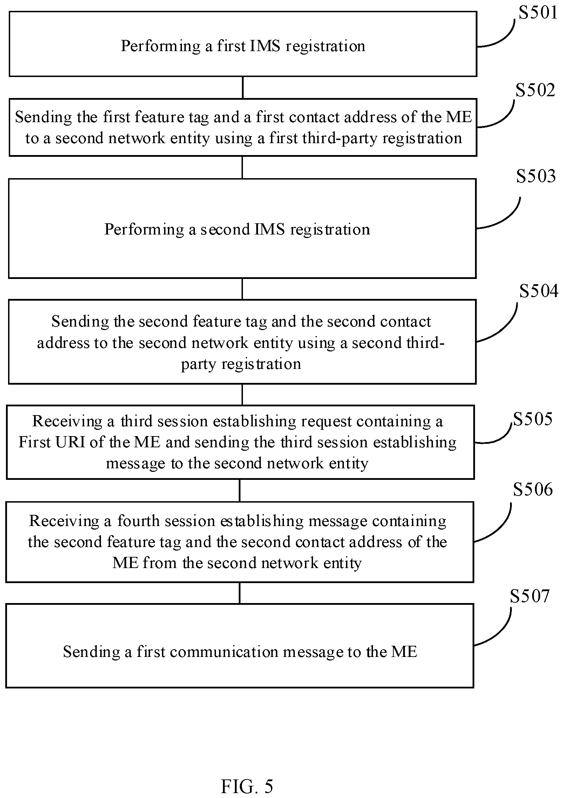

FIG. 5 is a flowchart of a communication method performed by a first network entity according to some embodiments of the present disclosure. The first network entity may be located in a first PLMN. The method may include following steps S501-S507.

Step S501: performing a first IMS registration of a ME.

Specifically, performing the first IMS registration of the ME includes receiving a first feature tag and a first private user ID from the ME in the first IMS registration via a first data connection.

Optionally, the step S501 further includes receiving at least one of a first register ID (RegID) and a first contact address from the ME in the first IMS registration via the first data connection.

In an example, at least one of the first RegID and the first contact address is received from the ME together with the first feature tag and the first private user ID.

In an example, the first data connection may be any bearer or session that may be used to transmit data. In the embodiments of the present disclosure, the first data connection may be a first Protocol Data Unit (PDU)/Packet Data Protocol (PDP) bearer or session. The first network entity may be a Serving Call Session Control Function (S-CSCF) entity in the 5GS, which functions to maintain a session state, performs a register function defined in the IETF RFC 3261, determines which Application Server (AS) to involve a session. The third network entity may be the Non-3GPP InterWorking Function (N3IWF)/Enhanced Packet Data Gateway (ePDG) entity.

The first contact address may be a first IP address (IP address 1) for the first IMS registration, or other any address from which the ME may be located.

Optionally, the first feature tag is used to indicate the first access type of the first IMS registration. In an example, the first access type of the first IMS registration may be a Third Generation Partnership Project (3GPP) access, e.g., a Cellular access.

Optionally, the step S501 may include following substeps S501a-S501e.

S501a: receiving the first register ID and the first contact address from the ME.

S501b: generating a first authorization token or resource token.

In an example, the first authorization token or resource token includes a first value, e.g., a first random number. The first value is generated by the first network entity or a fifth network entity (such as a P-CSCF) through performing a first computation using any one or more of the first register ID, the first contact address, a first URI (e.g. the first public user identity) associated with the first IMS registration, and a first key known to both the first network entity or the fifth network entity and the ME.

Optionally, if the first value is generated by the fifth network entity, the first network entity obtains the first value from the fifth network entity.

S501c: sending the first authorization token or resource token to the ME.

S501d: receiving a first authorization token value or a first resource token value from the ME.

S501e: comparing the first authorization token value or the first resource token value with a third value stored in the first network entity, and based on a result of the comparison, determining whether the first IMS registration is successful.

In an example, the first key known to both the first network entity and the ME may be an existing key that is created for a security association between the ME and the first network entity in the IMS system in the first PLMN.

Step S502: sending the first feature tag and the first contact address of the ME to a second network entity using a first third-party registration procedure.

Specifically, if the first network entity determines that the first IMS registration is successful, the first network entity sends the first feature tag and the first contact address to the second network entity. The second network entity may be an Application Server, (e.g., an SCC AS).

Step S503: performing a second IMS registration of the ME.

Specifically, performing the second IMS registration with the ME includes receiving, from the ME via a second data connection, a second feature tag used to indicate a second access type of a second IMS registration and the first private user ID in the second IMS registration.

Optionally, the step S503 further includes receiving at least one of a second register ID (RegID) and a second contact address (e.g. second IP address) from the ME in the second IMS registration via the second data connection.

In an example, at least one of the second register ID and the second contact address is received together with the second feature tag and the first private user ID.

Optionally, at least one of the first private user ID, the second feature tag used to indicate the second access type of the second IMS registration, the second register ID (RegID), the second contact address may be received by the first network entity through a third network entity in the first PLMN via the second data connection.

In an example, the second data connection may be a second Protocol Data Unit (PDU)/Packet Data Protocol (PDP) bearer or session. The third network entity may be a Non-3GPP InterWorking Function (N3IWF)/Enhanced Packet Data Gateway (ePDG) entity.

In an example, the second IMS registration is performed using the created secure association. The second contact address may be a second IP address (IP address 2) for the second IMS registration. The first register ID is different from the second register ID. The second IP address may have been assigned by the N3IWF/ePDG.

Optionally, the first access type of the first IMS registration is different from the second access type of the second IMS registration. The second feature tag is used to indicate the second access type of the second IMS registration, such as a non-3GPP access, or indicate that the access is from a Multi-SIM capable ME (MUSIM ME).

Optionally, the step S503 may include following substeps S503a-S503e.

S503a: receiving the second register ID and the second contact address from the ME.

S503b: generating a second authorization token or resource token.

In an example, the second authorization token or resource token includes a second value, e.g. a second random number. The second value is generated by the first network entity or the fifth network entity (such as the P-CSCF) through performing a second computation using any one or more of the second register ID, the second contact address, the first URI associated with the second IMS registration, and a second key known to both the first network entity or the fifth network entity and the ME.

Optionally, if the second value is generated by the fifth network entity, the first network entity obtains the second value from the fifth network entity.

S503c: sending the second authorization token or resource token to the ME.

S503d: receiving a second authorization token value or a second resource token value from the ME.

S503e: comparing the second authorization token or second resource token value with a fourth value stored in the first network entity, and based on a result of the comparison, determining whether the second IMS registration is successful.

In an example, the second key known to both the first network entity and the ME may be an existing key that is created for a security association between the ME and the first network entity in the IMS system in the first PLMN.

Step S504: sending the second feature tag and the second contact address to the second network entity through a second third-party registration.

Specifically, if the first network entity determines that the second IMS registration is successful, the first network entity sends the first feature tag and the first contact address to the second network entity.

Step S505: receiving a third session establishing message containing a first URI associated with a first SIM of the ME and sending the third session establishing message to the second network entity.

Step S506: receiving a fourth session establishing message containing the the second contact address of the ME from the second network entity.

Optionally, the fourth session establishing message may further include the second feature tag.

Optionally, the fourth session establishing message may further include parameters "require" and "explicit".

Step S507: sending a first communication message to the ME.

Specifically, the first communication message includes the second contact address. Optionally, the first communication message may further include the second feature tag.

Optionally, the communication method further includes receiving a second communication message or a third communication message from the ME via the second data connection, wherein the second communication message includes at least one of, but not limited to, the following: the first authorization token or resource token, the first contact address, the first register ID, the first URI, an indication of a task to be performed; the third communication message may include at least one of the second authorization token or resource token, the second contact address, the second register ID, and an indication of a task to be performed; determining whether the ME is to perform a de-registration procedure, based on the second communication message or the third communication message, wherein if the second communication message is received, the first IMS registration is determined to be de-registered, and if the third communication message is received, the second IMS registration is determined to be de-registered; and performing a de-registration procedure with the ME.

Specifically, the indication of the task to be performed may be a de-registration task.

Optionally, the communication method further includes receiving a fourth communication message or a fifth communication message from the ME via the second data connection, wherein the fourth communication message includes at least one of, but being not limited to, following: an indication of a task to be performed, the first register ID, the first URI, and the first IP address; the fifth communication message may include at least one of, but being not limited to, following: an indication of a task to be performed, the second register ID, the first URI, and the second IP address; determining whether the ME is to perform a refresh procedure, based on the fourth communication message or the fifth communication message, wherein if the fourth communication message is received, the first IMS registration is determined to be refreshed, and if the fifth communication message is received, the second IMS registration is determined to be refreshed; and performing a refresh procedure with the ME.

Optionally, if one of following event occurs: an event that the first IMS registration or the second IMS registration is expired, an event that the first IMS registration or the second IMS registration does not exist, an event that a URI is not associated with the first IP address or the second IP address, an event that the ME is not authorized to perform an action, and an event that an action is not supported, the communication method further includes sending information of the event to the ME to inform the ME of an error.

Specifically, the information of the event may be an error code.

Specifically, the indication of the task to be performed may be a refresh task.

Optionally, the communication method further includes: if the first IMS registration is determined to be refreshed, deleting a context associated with the first IMS registration, and re-performing a first IMS registration with the ME using the first data connection; if the second IMS registration is determined to be refreshed, deleting a context associated with the second IMS registration, and re-performing a second IMS registration with the ME using the second data connection.

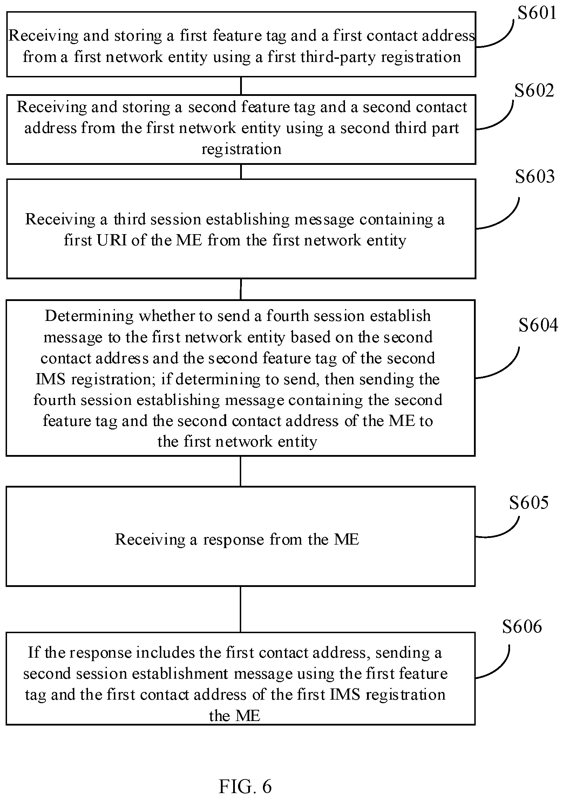

FIG. 6 is a flowchart of a communication method performed by a second network entity according to some embodiments of the present disclosure. The method may include following steps S601-S606.

Step S601: receiving and storing a first feature tag and a first contact address from a first network entity using a first third-party registration.

Specifically, the first contact address may be a first IP address (IP address 1) for the first IMS registration. The first network entity may be an S-CSCF entity in the 5GS, the second network entity may be an Application Server (AS).

The first feature tag is used to indicate the first access type of the first IMS registration. In an example, the first access type of the first IMS registration may be a 3GPP access, e.g., a Cellular access.

Optionally, the first public identity is sent to the second network entity together with the first private user ID and the first feature tag in the first third-party registration.

Step S602: receiving and storing a second feature tag and a second contact address from the first network entity using a second third-party registration.

Specifically, the second contact address may be a second IP address (IP address 2) for the second IMS registration. The second feature tag is used to indicate the second access type of the second IMS registration, such as a non-3GPP access, or indicate that the access is from a Multi-SIM capable ME (MUSIM ME).

The second feature tag may indicate that the second contact address is to be used for control plane messages e.g. SIP METHODs and not media e.g. Real-Time Transport Protocol (RTP) / Stream Control Transmission Protocol (SCTP) data.

Step S603: receiving a third session establishing message from the first network entity containing the first public user identity (e.g the first URI).

In an example, the first public identity is associated with the 1^{st} private user identity.

Step S604: determining whether to send a fourth session-establishing message to the first network entity based on the second contact address and the second feature tag of the second IMS registration; if determining to send, then sending the fourth session establishing message containing the second contact address of the ME to the first network entity.

Optionally, the fourth session establishing message further includes the second feature tag.

Optionally, parameters "require" and/or "explicit" are also included in the fourth session establishing message.

Step S605: receiving a response from the ME.

Optionally, the response may further include one or more of the first private user ID associated with the first SIM, the first Register ID, the first feature tag.

Step S606: if the response includes the first contact address, sending a second session establishment message using the first feature tag and the first contact address of the first IMS registration.

In the embodiment, the second network entity may be an Application Server in a 5G system, and executes services in an IMS subsystem.

Through the above technical solutions of the present disclosure, it may be ensured that a majority of services that could be potentially missed in the ME would be IMS-based service for the first SIM of the ME, and no paging procedure needs to be performed, and whether the ME is in a Radio Resource Control (RRC) Inactive state or an RRC Idle state, the ME may be reached for performing a SIP communication. Thus, a system resource is saved and misleading of reachability of the ME may be prevented.

The embodiments of the present disclosure further provide a communication method. The communication method includes following steps:
Step S701: generating, by the ME, a first message to create a first data connection in a first PLMN.
Step S702: performing, by the ME, a first IMS registration via the first data connection with a first network entity in the first PLMN, wherein performing the first IMS registration by the ME with the first network entity includes sending one or more of the first private user ID, the first public user identity (first URI), the first feature tag, the first contact address, and the first register ID to the first network entity by the ME.
Step S703: sending the first feature tag, the first public user identity, the first private user identity and the first contact address of the ME to a second network entity using a first third-party registration by the first network entity; and receiving and storing the first feature tag, the first public user identity, first private user identity and the first contact address from the first network entity through the first third-party registration by the second network entity.
Step S704: suspending a part or all of the first PDU/PDP bearers by the ME.
Step S705: generating, by the ME, a second message to create a second data connection in a second PLMN.
Step S706: performing a second IMS registration by the ME with the first network entity, wherein, performing the second IMS registration by the ME with the first network entity includes sending one or more of the first private user ID, the first public user identity, the second feature tag, the second contact address, and the second register ID to the first network entity by the ME.
Step S707: sending the second feature tag, the first public user identity, the first private user identity and the second contact address to the second network entity using a second third-party registration by the first network entity; and receiving and storing the second feature tag and the second contact address from the first network entity through the second third-party registration by the second network entity.
Step S708: receiving a third session establishing message containing the first public user identity (e.g the first URI associated with a first SIM of the ME) and sending the third session establishing message to the second network entity by the first network entity; and receiving the third session establishing message containing the first public user identity from the first network entity by the second network entity.
Step S709: determining whether to send a fourth session-establishing message to the first network entity based on the second contact address and the second feature tag of the second IMS registration by the second network entity.
Step S710: if determining to send, then sending the fourth session establishing message containing the second feature tag and the second contact address of the ME to the first network entity by the second network entity; and receiving a fourth session establishing message containing the second feature tag and the second contact address of the ME from the second network entity by the first network entity.
Step S711: sending a first communication message to the ME by the first network entity.

Optionally, the first communication message may be a SIP MESSAGE message, or the first communication message is a first session establishing message (e.g., a SIP INVITE message) including the second feature tag and the second contact address of the ME.

Step S712: determining whether the first communication message includes the second feature tag and/or the second contact address by the ME; if the first communication message includes the second feature tag and/or the second contact address, determining, by the ME, to accept the first communication message, and sending a response to the first network entity to indicate that the first private user ID is used for subsequent communication between a second network entity and the ME, wherein the response includes the first contact address.

Step S713: resuming any of the suspended first PDU/PDP bearers by the ME.

Step S714: receiving a second session establishing message from the second network entity by the ME, wherein the second session establishing message includes the first feature tag.

Details of the steps S701-S714 of the communication and related description thereof may be obtained from the above descriptions with reference to FIG. 2-6, and the same technical problems may be addressed, and the same technical effects may be achieved. To prevent duplication, the relevant description thereof and the details thereof are omitted herein.

Through the above technical solution of the present disclosure, it may be ensured that a majority of services that could be potentially missed in the ME would be IMS-based service for the first SIM of the ME, and no paging procedure needs to be performed, and whether the ME is in a Radio Resource Control (RRC) Inactive state or an RRC Idle state, the ME may be reached for performing a SIP communication. Thus, a system resource is saved and misleading of reachability of the ME may be prevented.

The embodiments of the present disclosure will be described in more details by means of following examples. The following examples are described by way of a scenario in which the ME communicates with 5G network entities in a 5G system (5GS). However, the 5G network entities may be also replaced by 4G network entities in EPC, and the same technical effects may be achieved, and a scenario in which the ME communicates with 4G network entities will not be further described in details.

English abbreviations in the following example may include an Access Management Function (AMF) entity, an Application Server (AF), a Proxy-Call Session Control Function (P-CSCF) entity, a Public User Identity (PUI), a Serving Call Session Control Function (S-CSCF) entity, a Unified Data Management (UDM) entity, a User-Plane Function (UPF) entity, a Non-3GPP InterWorking Function (N3IWF)/Enhanced Packet Data Gateway (ePDG), a Session Initiation Protocol (SIP), a Server Centralized and Continuity Application Server (SCC AS), a IP Multimedia Subsystem (IMS), a Session Management Function (SMF) entity, Single Network Slice Selection Assistance Information (S-NSSAI), a requested Data Network Name (DNN), an Access Point Name (APN), a Service and Session Continuity Mode (SSC Mode), a PDN Gateway (P-GW), a Policy and Charging Control (PCC) subsystem, a Network Exposure Function (NEF) entity, a Uniform Resource Identifier (URI), eXtensible Markup Language (XML).

The ME in the following examples includes a first USIM (USIM 1, hereinafter) and a second USIM (USIM2, hereinafter).

In an implementation, following 6.X.1 to 6.X.2 may replace that in 3GPP TS 23.761.

| **6.X Solution #X: MT Service Notification through IMS connected via N31WF** | | |
|---|---|---|
| **6.X.1 Introduction** | | |
| The solutions mainly address the key issue 1: Handling of Mobile Terminated service with Multi-USIM device. | | |
| Mobile terminated services can be classified into two groups | | |
| | Operator based services: These are services offered by the operator, they fall into 2 categories: | |
| | | - SMS based services |
| | | - IMS based services |
| | Non operator based services | |
| Given that non operator based services can be encrypted or use proprietary protocols the ability to identify those services is limited. SMS is also supported via IMS, therefore this solution only address's IMS based solutions i.e. services that can be easily identified by the operator. | | |

| **6.X.2 Functional Description** | | |
|---|---|---|
| For the single receiver multi-USIM device, if USIM 1 is registered in 3GPP system (e.g. PLMN 1), and USIM 2 is also registered in 3GPP system (e.g. PLMN 2), it will be ideal if multi-USIM device only needs to monitor one system, i.e. a single PLMN. This can be achieved by the following mechanism: | | |
| | 1. Both USIMs initial register independently first as defined in TS 23.501 [4] and TS 23.502 [6]. | |
| | 2. If the multi-USIM device decides to monitor MT IMS services on one system (e.g. PLMN 1), the USIM 2 triggers the creation of a secure to tunnel to N3IWF/ePDG in PLMN 2. IMS then performs an IMS REGISTRATION via the secure tunnel to the IMS subsystem with an indication that this is for USIM2 | |
| | 3. When MT IMS service is triggered in PLMN 2, the IMS sends the SIP METHOD via the IMS REGISTRATION made via PLMN1. This eliminates the need for the UE to be paged in PLMN2. The SIP METHOD will contain sufficient information so that the UE can determine who the originating party is and what service is being requested. For SMS and USSI the UE does not need to return to PLMN2 | |
| 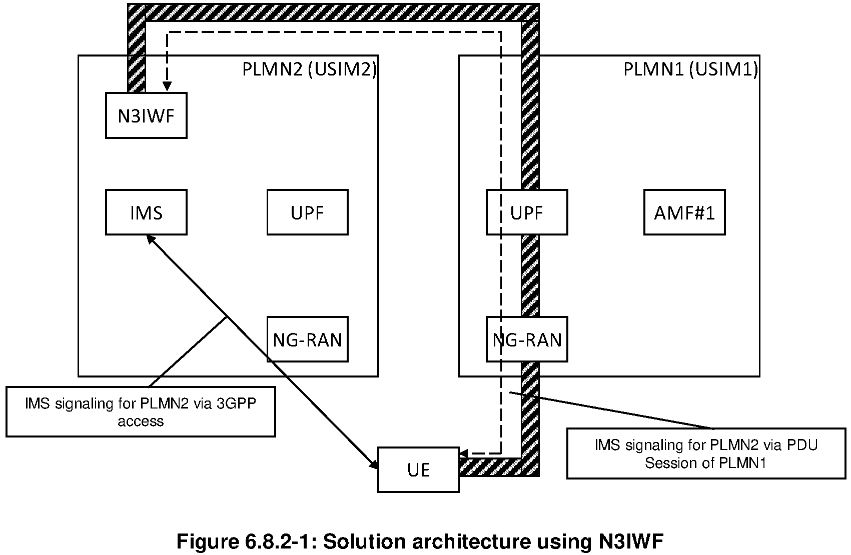 | | |
| | NOTE: The UE selects the N3IWF in the PLMN2 where the IMS is located. | |
| 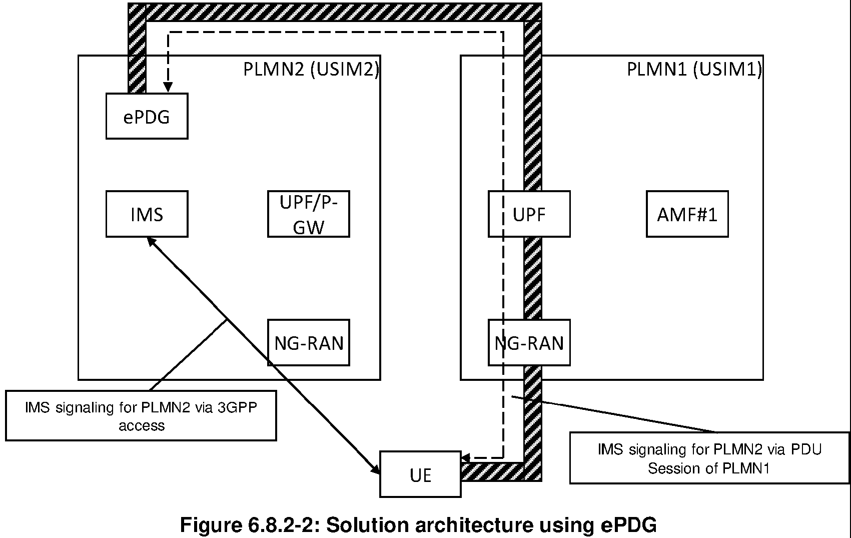 | | |

| **6.X.3 Procedures** | | |
|---|---|---|
| **6.X.3.1 IMS Notification procedure through N3IWF** | | |
| | Figure 6.X.3.1-1 shows the call flow of IMS Notification procedure in 5GS through N3IWF. By IMS Notification through N3IWF, the network can also eliminate the paging in 3GPP access triggered by IMS MT service. | |
| 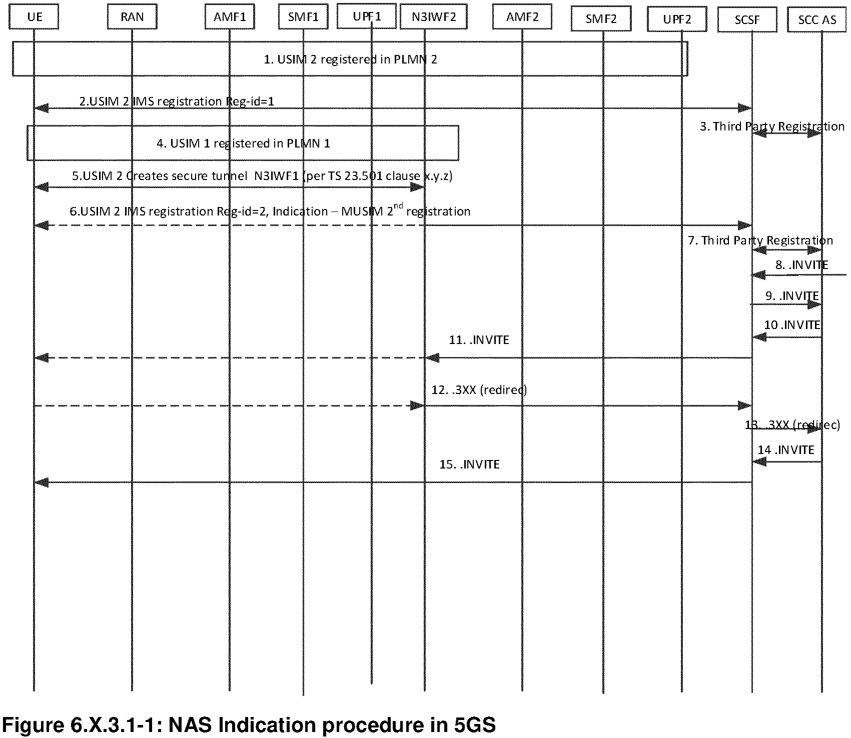 | | |
| | NOTE 1 The N3IWF could be an ePDG in the Figure 6.X.3.1-1. | |
| | 1. The multi-USIM device registers in PLMN2 using USIM2 and establishes PDU sessions. | |
| | 2. The multi-USIM device in PLMN2 using USIM2 performs a IMS REGISTRATION with contact address IP1 over IMS well known DNN/APN. | |
| | 3. The S-CSCF performs a 3^{rd} party registration with the SCC AS. | |
| | NOTE 2: SCC AS is described in TS 23.292 | |
| | 4. The multi-USIM device registers in PLMN1 using USIM1 and establishes PDU sessions. | |
| | 5. The multi-USIM device registers in PLMN2 using USIM2 via N3IWF using one of the established PDU sessions is step 4. ALTERNATIVE BEHAVIOUR | |
| | The multi-USIM creates a secure connection to the N3IWF or ePDG using USIM2. | |
| | NOTE 3: This secure connection procedure uses non 3GPP access procedures as defined in TS 23.502 clause 4.12 or clause 4.12b or TS 23.402. | |
| | 6. The multi-USIM device in PLMN2 using USIM2 performs a 2^{nd} IMS REGISTRATION using the non 3GPP connection that was established as step 5 with contact address IP2. This IMS registration contains an indication that it is 2^{nd} IMS REGISTRATION and is related to a MUSIM capable UE. | |
| | 7. The S-CSCF performs a 3^{rd} party registration with the SCC AS for the 2^{nd} IMS REGISTRATION that was performed in step 6. | |
| | 8. The S-CSCF receives an IMS session INVITE for Public User Identity associated with USIM2 | |
| | 9. The S-CSCF sends the IMS INVITE to the SCC AS. | |
| | 10. The SCC AS receives the IMS INVITE and determines there are 2 IMS registrations associated with the Public User Identity received in the INVITE. The SCC AS chooses the contact address (IP2) associated with the 2^{nd} IMS REGISTRATION. It includes in the SIP INVITE an indication that the 2^{nd} IMS REGISTRATION should be chosen. | |
| | 11. The S-CSCF receives the SIP INVITE from the SCC AS, determines that the 2^{nd} IMS REGISTRATION should be chosen and sends the INVITE to the UE via the 2^{nd} REGISTRATION that is using non 3GPP access that was set-up in step 5. | |
| | 12. The UE determines that it wants to accept the IMS session so sends a redirect message back to the SCC AS to inform the SCC AS to choose the contact address associated with 1^{st} IMS REGISTRATION. The UE then tunes / moves back to PLMN 2. | |
| | 13. The S-CSCF send the message in step 12) to SCC AS | |
| | 14. The SCC AS receives the message in step 13), determines that there is another IMS REGISTRATION that can be used to establish the session and sends the SIP INVITE to S-CSCF to use the 1st IMS REGISTRATION. | |

### Example 1

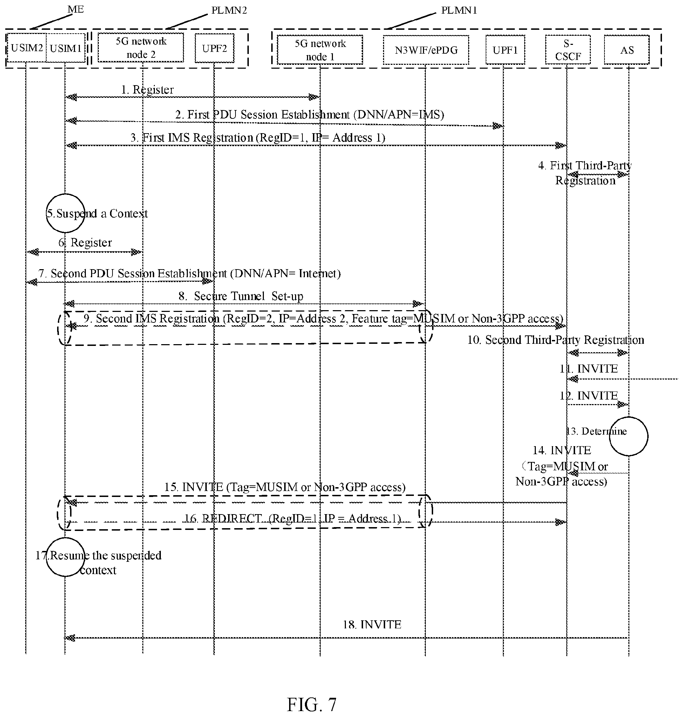

FIG. 7 is a specific flow of a register procedure of a communication method of the present disclosure. Referring to FIG.7, the flow specifically includes following steps.

Step 1: a ME performs a first REGISTER procedure using a USIM 1.

In the first REGISTER procedure, the ME may send a first REGISTER message to a first 5G core network node in a 5G system in a first PLMN, or the ME may send an ATTACH message to a first 4G core network node in a 4G EPC network in the first PLMN. A network node for performing the REGISTER procedure in a 5G system or a network node in a 4G EPC network for performing the ATTACH procedure is known in the art, and thus will not be further described herein.

Step 2: the ME establishes and activates one or more first PDU/PDP bearers with a first UPF (UPF1) in the first PLMN.

If in the 4G EPC network, a function of the UPF1 is replaced by the P-GW.

As an example, a requested DNN or APN for indicating "IMS" may be sent to the UPF1 in this step.

Step 3: the ME performs a first IMS REGISTRATION with the S-CSCF in the first PLMN using the USIM1.

In the first IMS REGISTRATION, the ME sends at least one of (but not limited to) a first private user ID associated with USIM1, a first Register ID (RegID 1), a contact address (IP address 1), and a first feature tag to the S-CSCF. The first feature tag is used to indicate an access type of the first IMS REGISTRATION. The access type may be a 3GPP access type. As an example, the first feature tag may be a "cellular" in g.3gpp.accesstype media feature tag in Section 6.2 ICS UE in 3GPP TS 24.292.

In this first IMS REGISTRATION, the S-CSCF in the first PLMN may also return a resource ID or a first authorization token to the ME. As an example, the first token may be a "200OK" message in a SIP MESSAGE set. The ME, specifically, an IMS client associated with the USIM1 in the ME, may receive and store the first authorization token.

The first authorization token may be stored against the first private user ID or a public user ID, and associated data. Following is an example of a format of an association among the first private user ID, the first contact address, the first RegID and the first authorization token.
Private user ID
|-> Contact address=IP1
1->RegID = 1
|->authorisation token.

The first authorization token will be used in a deregistration process or a refresh process which will be described later.

Step 4: the S-CSCF in the first PLMN performs a first third-party registration with an SCC AS.

In this first third-party registration, the S-CSCF may forward one or more of the above first private user ID, the first contact address, and the first RegID to the AS, and the AS may store them.

Step 5: the ME may suspended a part or all of PDU/PDP bearers or PDU/PDP contexts have been created in step 2.

Step 6: the ME may perform a second REGISTER procedure using a USIM 2.

In the second REGISTER procedure, the ME may send a second REGISTER message to a second 5G core network node in a second PLMN in a 5G system, or the ME may send an ATTACH message to a second 4G core network node in a 4G EPC network in the second PLMN. A network node for performing the REGISTER procedure in a 5G system or a network node in a 4G EPC network for performing the ATTACH procedure is known in the art, and thus will not be further described herein.

Step 7: the ME establishes and activates one or more second PDU/PDP bearers with a second UPF (UPF2) in the second PLMN.

In a process of establishing and activating the second PDU/PDP bearers, one or more of following may be sent to an AMF entity or a SMF entity in the 5G system: S-NSSAI, a requested DNN or APN (internet or IMS', where the IMS' indicates an IMS control plane only) and a SSC Mode (SSC Mode 1); and the AMF entity and/or the SMF entity sends the above information to the UPF2. Based on any or a combination of the above information, the UPF2 determines that the second PDU/PDP bearer is to be configured for an IMS control plane traffic only..

The UPF2 may provide the above information to the AS (e.g., SCC AS) in the first PLMN via a PCC subsystem or the NEF, so that the AS may be informed of the above information and take the information into account in later steps.

Step 8: the ME sets up a secure association with the N3IWF/ePDG, using the second PDU/PDP bearer created in step 7.

The secure association may be an IPsec tunnel.

Step 9: the ME may perform a second IMS REGISTRATION with the S-CSCF in the first PLMN.

In this step, the ME, specifically the IMS client associated with USIM1, may send one or more of following to the S-CSCF: the first private user ID associated with USIM1, a second RegID different from the first RegID, a second contact address (IP address 2), and a second feature tag.

The second feature tag may be used to indicate that this registration is using a non-3GPP access via a 5G system or a 4G EPC network or this registration is from a Multi-SIM capable ME (i.e. MUSIM).

In an implementation, a feature tag "MUSIM" or "non-3GPP access" may be added into an existing "3gpp.accesstype media feature tag" in 3GPP TS 24.292 as follows. Note these terms are used for illustrative purposes and could be another alphanumeric string.

| **TS 24.292** | | | | |
|---|---|---|---|---|
| **6.2ICS UE** | | | | |
| In the present document, "ICS is enabled for the UE" refers to all of the following conditions: | | | | |
| - the ICS MO ICS_Capabilities_Enabled leaf node (see 3GPP TS 24.286 [43]) is set to enabled; and | | | | |
| - the ability of simultaneous use of a CS bearer and use of PS for the service control signalling path. | | | | |
| Prior to performing IMS registration the ICS UE shall check that the ICS MO ICS_Capabilities_Enabled leaf node (see 3GPP TS 24.286 [43]) is set to enabled for this ICS UE; otherwise ICS is disabled for this ICS UE and the ICS UE shall perform as in 3GPP TS 24.229 [11] and in 3GPP TS 24.008 [7]. | | | | |
| If the ICS UE has an IMEI, prior to performing registration, the ICS UE shall generate an instance id based on its IMEI as defined in 3GPP TS 23.003 [4]. | | | | |
| If ICS is enabled for the UE then the ICS UE registers to IM CN subsystem as specified in 3GPP TS 24.229 [11] and includes its capabilities in the Contact header field. The ICS UE shall include in the Contact header field: | | | | |
| a) a g.3gpp.ics media feature tag set to "principal" as specified in annex B.2; | | | | |
| | b) a g.3gpp.accesstype media feature tag set to one of the following text strings based on the access network technology being used by the UE to register, as follows: | | | |
| | - "wlan": the UE is using WLAN access technology; | | | |
| | - "cellular": the UE is using cellular access technology; | | | |
| | - "docsis": the UE is using DOCSIS access technology; | | | |
| | - "dsl": the UE is using DSL access technology; | | | |
| | - "ethernet": the UE is using Ethernet access technology; | | | |
| | **"MUSIM": the UE is using non 3GPP access via cellular access technology;** | | | |
| | - **"non-3GPP access": the UE is using non 3GPP access.** | | | |
| | | Additionally to ensure that the text string is unique for that registration flow the UE shall append a unique numerical single digit value for each registration flow to the text string value above (e.g "wlan1"); and | | |
| c) a sip.instance media feature tag containing the instance ID; | | | | |

| **10.4.3 SCC AS for call termination in IM CN** | | | | |
|---|---|---|---|---|
| When the SCC AS serving the terminating ICS UE receives an initial SIP INVITE request due to initial filter criteria and the T-ADS results in choosing to deliver media in the PS domain, the SCC AS shall act as a B2BUA, and | | | | |
| | - if multiple contacts are registered in the PS domain and the T-ADS chooses to establish different media types using different IP-CANs, the SCC AS shall for each selected PS domain IP-CAN create a SIP INVITE request in accordance with 3GPP TS 24.229 [2] and shall include, in this request; | | | |
| | | i) an Accept-Contact header field containing the g.3gpp.accesstype media feature tag containing the value associated at registration with the selected PS domain IP-CAN. **If** **a contact is registered and contains the g.3gpp.accesstype media feature tag=MUSIM and this is the first time that this URI in the Request URI of the initial SIP INIVTE request is being targeted then the Accept-Contact header-field shall contain the g.3gpp.accesstype media feature tag =MUSIM;** | | |
| | NOTE 1: The SCC AS can determine which g.3gpp.accesstype media feature tag values to use by taking into account the access-type and access-class of the P-Access-Network-Info header and the value of the g.3gpp.accesstype media feature tag. The values in the 3gpp.accesstype media feature tag does not necessarily always identify an IP-CAN. | | | |
| | NOTE 2: It is possible that a handover between different IP-CANs can take place without a reregistration of the UE and corresponding update of access-type and access-class (e.g. from "3GPP-UTRAN" to "3GPP-E-UTRAN"). The SCC AS needs to take this possibility into account when determining the IP-CAN to use. | | | |
| | NOTE 3: If the SCC AS wants to preclude the request to be sent to the UE by the S-CSCF (through sequential forking) over a different IP-CAN than the one it explicitly selected, it needs to include the parameters "require" and "explicit" along with the g.3gpp.accesstype media feature tag. If it intends to allow the S-CSCF to fork between different IP-CANs, it can do that by excluding those parameters. | | | |
| | NOTE 4: If the SCC AS wants to preclude the SIP INVITE request to be sent to UEs by the S-CSCF (through forking) that are registered via an IP-CAN that is not suitable for the media described in the SDP, it can select the UE by including an Accept-Contact header field containing a sip.instance media feature tag of the selected UE along with the parameters "require" and "explicit", or by using a public GRUU of the selected UE as the Request URI. | | | |
| If the SCC AS receives a 488 (Not Acceptable Here) response, from: | | | | |
| | - a UE: | | | |
| | | i. not including any SDP body; or | | |
| | | ii. including an SDP body: | | |
| | | | a) without a media description ("m=") indicating "audio"; | |
| | | | b) with a media description ("m=") only indicating "audio" with the <proto> subfield set to "PSTN" and with a connection data line ("c=") with <nettype> set to "PSTN"; | |
| | | then, the SCC-AS may follow the procedures in: | | |
| | | | **0) subclause 10.4.4 if one or more registered contacts for the URI in the Request-URI of the initial SIP INVITE request that has not already been targeted contains the:** | |
| | | | | **I) g.3gpp.ics media feature tag set to "principal"; or** |
| | | | | **II) g.3gpp.accesstype media feature tag=cellular** |
| | | | 1) subclause 10.4.5 if one or more registered contacts for the URI in the Request-URI of the initial SIP INVITE request contains the g.3gpp.ics media feature tag set to "server"; or | |
| | | | 2) subclause 10.4.7. | |
| **If the SCC AS receives a 300 (Multiple choice) or 302 (Moved Temporarily) response, from:** | | | | |
| | **- a UE:** | | | |
| | | **i. including at least one contact header field then, the SCC-AS may follow the procedures in:** | | |
| | | | **0) subclause 10.4.4 using the IP address in the contact header field per RFC 3261 if that IP address has not already been targeted.** | |
| | | | **1) subclause 10.4.5 if one or more registered contacts for the URI in the Request-URI of the initial SIP INVITE request contains the g.3gpp.ics media feature tag set to "server"; or** | |
| | | **2) subclause 10.4.7.** | | |
| | **ii. has no contact header field** | | | |
| | | **1) subclause 10.4.5 if one or more registered contacts for the URI in the Request-URI of the initial SIP INVITE request contains the g.3gpp.ics media feature tag set to "server"; or** | | |
| | | **2) subclause 10.4.7.** | | |
| If the SCC AS receives a18x response including an SDP answer with a media description ("m=") set to "audio" and port portion set to "0", the SCC AS may follow the procedures in subclause 10.4.5 or subclause 10.4.7. | | | | |
| **UE behavior** | | | | |
| **If the UE decides to use an IP bearer, then the UE shall establish thus session in accordance with 3GPP TS 24.229 with the following clarifications:** | | | | |
| | **If the SIP INVITE request contains an Accept-Contact header field containing the** **g.3gpp.accesstype media feature tag containing the value=MUSIM and the UE** has **another registration where the Accept-Contact header field in that registration contained the g.3gpp.accesstype media feature tag containing the value=Cellular, then the UE shall send back a** | | | |
| | **EMBODIMENT 1** | | | |
| | **3XX with the contact header field set to contain the IP address associated with the registration whose g.3gpp.accesstype media feature tag containing the value=Cellular.** | | | |
| | EMBODIMENT 2 | | | |
| **SIP 606 (Not Acceptable)** | | | | |

The feature tag "MUSIM" or the "non-3GPP access" is configured for indicating that the ME is using the non-3GPP access via a cellular access technology.

In this second IMS REGISTRATION procedure, the ME may also receive a second authorization token or resource token from the S-CSCF in the first PLMN. The second authorization token may be configured for a deregistration process or a refresh process which will be described later.

Step 10: the S-CSCF in the first PLMN performs a second third-party registration with the AS.

In this step, information sent to the S-CSCF in the step 9, such as one or more of the first private user ID associated with USIM1, a second RegID different from the first RegID, a second contact address (IP address 2), and a second feature tag may be sent to the AS.

Step 11: the S-CSCF receives a SIP METHOD (e.g. an INVITE) message containing a URI associated with USIM1.

Step 12: the S-CSCF sends the SIP METHOD message to the AS.

Step 13: the AS, upon receipt of the SIP METHOD message, determines whether there are multiple contact addresses that have been registered for the URI (e.g. the first public user identity) in the SIP METHOD message; if the AS determines that there is a registration associated with the URI bound to a contact address that has been registered using a non-3GPP access over cellular or registered with a MUSIM ME, or there is an contact address of an IMS registration that can only be configured for an IMS control plane, then the AS may select the contact address that has been registered using the non-3GPP access over cellular or registered with the MUSIM ME.

In this step, the AS needs to determine how to route the SIP METHOD message, thus the AS needs to determine whether there are multiple contact addresses that have been registered for the URI in the SIP METHOD message.

As an example, the AS may include a database of URIs mapped to contact addresses, and the AS may query the database of URIs to acquire the contact address. As an example, a format of an item in the database of URIs may be following:
Public user ID (e.g. SIP URI)
|-> Contact address=IP1
|->Reg ID = 1
|->IMEI
|->Gr parameter
|->Time last active
wherein the Public user ID may be a URI (e.g. SIP URI).

It should be noted that this format is only illustrative, and in practical applications, a part of the above five parameters may be stored instead.

Optionally, in the determination by the AS, the AS may also query the 4G EPC or the 5G system to determine a state of the ME in the EPC or the 5G system (e.g. a last access attempt in the first PLMN and the second PLMN), see 3GPP TS 29.272 or 3GPP TS 29.518. If the 4G EPC or the 5G system sends the state of the ME back, then the AS may choose the PLMN in which the ME has been active last.

Step 14: the AS sends the SIP METHOD message including the second feature tag to the S-CSCF.

The second feature tag identifies the second contact address that has been registered using the non-3GPP access over cellular or registered with the MUSIM ME. Optionally, the second SIP METHOD message may also include parameters "require" and "explicit". A function of the parameters "require" and "explicit" are defined in an IETF RFC 3841.

Optionally, the SIP METHOD does not include the second feature tag.

Step 15: the S-CSCF, upon receipt of the SIP METHOD from the AS, choose the second contact address registered via the secure channel established in step 8, if the second feature tag is included in the SIP METHOD message, and sends a SIP message to the ME.

In this step, if the SIP METHOD message does not include the second feature tag, the S-CSCF may apply any "Q" value or fork the SIP METHOD message. A concept of the "Q" value is defined in an IETF RFC 3841, and will not be further described herein.

Step 16: the ME determines a type of the SIP message and sends a response to the S-CSCF.

In this step, if the SIP message is a MESSAGE, then the ME accepts it and sends a "200OK" to the S-CSCF.

If the SIP message is an INVITE, then the ME decides to accept the INVITE, but this accept is using the first PLMN, and sends the response to the S-CSCF to indicate the accept. The response may be a response code, which may be a "3XX" or "4XX" or "5XX" SIP message, wherein the "XX" represents a number herein, see the RFC 3261.

Step 17: the ME tunes or goes back to the first PLMN and resume the suspended PDU/PDP bearers in the first PLMN. "Tune" implies the ME re-establishes communications with the first PLMN.

Optionally, the ME may sends a Non-Access-Stratum (NAS) message to a core network entity, such as an AMF entity, to resume the suspended PDU/PDP bearers in the first PLMN.

Step 18: the S-CSCF forwards the response of the ME to the AS.

Step 19: the AS receives the response, and determines whether there is an alternative contact address for the URI received in step 12 that is registered via a cellular network, and if the alternative contact address (i.e., the first contact address), then the AS chooses this alternative contact address and sends a SIP message (e.g. an INVITE message) to the ME, wherein the SIP message includes the first feature tag.

In the determination by the AS, the AS may obtain the response code in the response and determined whether there is the alternative contact address, or the AS may check any information (such as an RegID in the response) against information sent from the S-CSCF in the first third-party registration and stored in the AS, to determine whether there is a match therebetween, if there is the match, then the AS can use the contact address contained in the information sent from the S-CSCF in the first third-party registration.

Optionally, the AS may add parameters "explicit" and "required" in the SIP message to be sent to the ME.

Through the above steps, the ME may inform the AS that the USIM1 of the ME is available for a SIP communication.

### Example 2

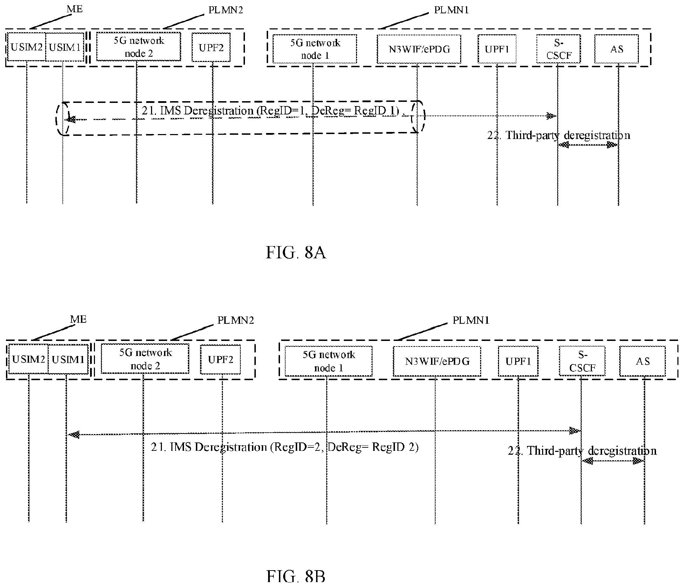

FIGs. 8A and 8B are specific flows of a deregistration procedure of a communication method according to some embodiments of the present disclosure.

The ME may have the above two IMS REGISTRATIONs associated with the first USIM in the first PLMN and the second PLMN and is provided with the first contact address, the first RegID (RegID=1), the second contact address, the second RegID (RegID=2). If the ME decides to deregister (or deactivate) the above first IMS registration or the second IMS registration, then referring to FIG.7, the flow specifically includes following steps.

Step 21: if the ME decides to deregister the first IMS registration, as shown in FIG.8A the ME sends a first SIP MESSAGE using a control-plane connection associated with the second IMS REGISTRATION created in step 9.

The first SIP MESSAGE includes one or more of following: the first authorization token or resource token obtained by the ME in step 3, the first contact address (i.e., the first IP address), the first RegID (RegID=1), the URI, and an indication of a task to be performed.

The indication of the task to be performed in this step is "DEREGISTER".

The first SIP MESSAGE may be constructed using any of following ways:
1. XML (eXtensible Markup Language)
2. New feature tag.
   E.g. 3g.IMSfeature= [contact address IP1], [reg id 1], [authorization token], [task]
3. URI parameters

It should be noted that the order and names of above parameters in "2. New feature tag" are illustrative, and a part of the above parameters may be used in actual implementations.

Values of the "task" in "2. New feature tag" may be any of REFRESH, DEREGISTER, and REGISTER.

In step 21, if the ME decides to deregister the second IMS registration, as shown in FIG. 8B, the ME sends a second SIP MESSAGE using a control-plane connection associated with the first IMS REGISTRATION created in step 3.

The second SIP MESSAGE includes one or more of following: the second authorization token or resource token obtained by the ME in step 9, the second contact address (i.e., the second IP address), the second RegID (RegID=2), the URI, and an indication of a task to be performed.

The indication of the task to be performed in this step is "DEREGISTER".

The second SIP MESSAGE may be constructed using any one or any combination of following ways:
1. XML (eXtensible Markup Language);
2. New feature tag;
   E.g. 3g.IMSfeature= [contact address IP2], [reg id 2], [authorization token], [task]
3. URI parameters.

Step 22: the S-CSCF performs a third-party deregistration with the AS.

In this third-party deregistration, the S-CSCF may send the SIP MESSAGEs to the AS.

### Example 3

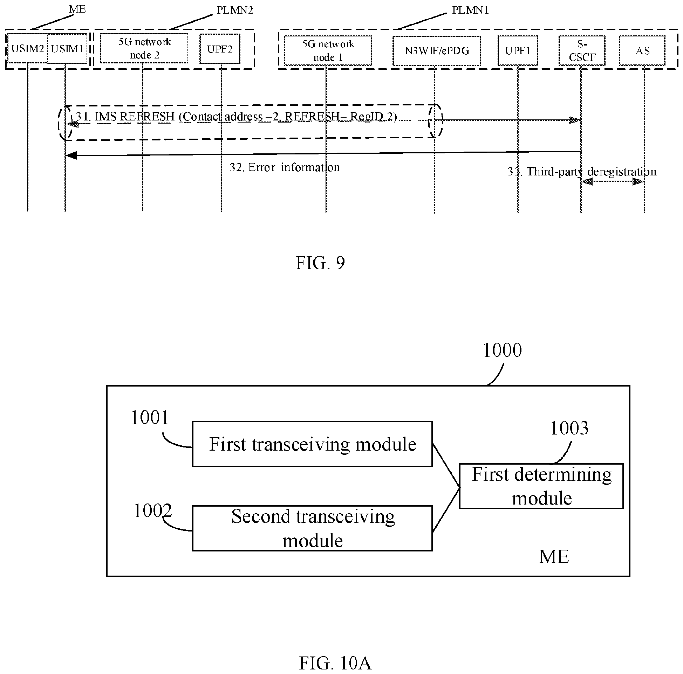

FIG. 9 is a specific flow of a refresh procedure of a communication method according to some embodiments of the present disclosure.

The ME may be in a CONNECTED state via the second PLMN or in a CONNECTED state with the second PLMN. In such a condition, if the ME needs to refresh the first IMS registration with the first PLMN, the refresh procedure may be performed using the second contact address. Referring to FIG.8, the flow specifically includes following steps.

Step 31: if the ME determines that an event occurs, the ME determines that the first IMS REGISTRATION needs to be refreshed, and the ME sends a SIP MESSAGE (e.g., an IMS REFRESH message) to the S-CSCF, wherein SIP MESSAGE includes an indication that the first IMS REGISTRATION needs to be refreshed.

The event may be that a timer reaches a specific value stored in the ME in advance.

Step 32: receiving by the ME, a message from the S-CSCF indicating that an error occurs in the 5G core network. The message from the 5G core network may include information indicating any of the following errors:
1. REGISTRATION expired
2. REGISTRATION does not exist
3. URI not associated with contact address
4. Unauthorized to perform action
5. action not supported

Upon receipt the above information indicating the errors, the ME deletes an existing context associated with the first IMS REGISTRATION with the first PLMN. Optionally, the ME may choose to re-performs a first IMS REGISTRATION with the first PLMN as that described in step 9.

Optionally, deleting the existing context associated with the first IMS REGISTRATION with the first PLMN may include updating an internal context associated with the first IMS REGISTRATION in the ME and marking the first IMS REGISTRATION as "deleted" .

The indication that the first REGISTRATION needs to be refreshed may include, but not be limited to, following:
1. Indication of a task to be performed, in this case REFRESH/IMS REREGISTRATION;
2. RegID; indicating which IMS registration to be refreshed (in this case, RegID1)
3. URI;
4. Contact address associated with the refreshed registration; in this case, the second contact address.

The above information could be sent in a SIP METHOD (e.g Registration Message) and constructed using any one or any combination of following ways:
1. XML;
2. New feature tag;
   E.g. 3g.IMSfeature= [contact address IP2], [reg id 2], [authorisation token], [task];
3. URI parameters.

It should be noted that an order and names of above parameters in "2. New feature tag" are illustrative, and a part of the above parameters may be used in actual implementations.

Values of the "task" in "2. New feature tag" may be any of REFRESH, DEREGISTER, and REGISTER.

Step 33: the S-CSCF performs a third-party registration with the AS.

If the second IMS registration needs to be refreshed, the refresh procedure may be performed using the second data connection. Other configuration for refreshing the second IMS registration may be similar to those for refreshing the first IMS registration, and thus is not described herein further. The configuration may obtained from the above description of refreshing the first IMS registration.

Based on the same inventive concept, some embodiments of the present disclosure further provide a mobile equipment (ME). FIG. 10A is a first schematic structural diagram of a ME according to some embodiments of the present disclosure.

The ME 1000 may include a first transceiving module 1001, a second transceiving module 1002, a first determining module 1003.

The first transceiving module 1001 is specifically configured for generating a first message to create a first data connection in a first PLMN.

The first data connection may be any bearer or session that may be used to transmit data. In the embodiments of the present disclosure, the first data connection may be a first Protocol Data Unit (PDU)/Packet Data Protocol (PDP) bearer or session.

Specifically, the first transceiving module 1001 is configured for: performing a first Register/Attach procedure with a first core network node in the first PLMN; establishing the first PDU/PDP bearer with a second core network node in the first PLMN.

In an example, the second core network node may be a first UPF (User Plane Function) entity in the 5GS; in another example, the second core network node may be the first PGW in the 4G EPC network.

Optionally, the first transceiving module 1001 is further configured for performing a first IMS registration via the first data connection with a first network entity in the first PLMN.

Specifically, the first transceiving module 1001 is configured for sending, when performing the first IMS registration, the first private user ID and the first feature tag used to indicate a first access type of the first IMS registration to the first network entity.

The first access type of the first IMS registration may be a 3GPP access, e.g., a Cellular access.

Specifically, when performing the first IMS registration, the first transceiving module 1001 is configured for sending the first register ID and the first contact address to the first network entity; receiving a first authorization token or resource token from the first network entity; and storing the first authorization token or resource token.

Optionally, at least one of a first Register ID (RegID), and a first contact address (i.e., first IP address) may be sent to the first network entity together with the sending the first private user ID and the first feature tag during the first IMS registration.

In an example, a following association relation may created and stored in the ME: an association between the first authorization token and the first private user ID, or an association among the first authorization token, the first contact address, the first RegID, and the first private user ID.

In an example, the first authorization token includes a first value (such as a first random number) generated by the first network entity through performing a first computation using the first register ID, the first contact address, a first URI associated with the first IMS registration, and a first key known to both the first network entity and the ME.

Optionally, the ME further includes a calculating module 1004. The calculating module 1004 is configured for performing the same first computation using the first value, the first register ID, the first contact address, the first URI associated with the first IMS registration, and the first key; and generating a first token value. The first transceiving module 1001 is used for sending the first token value to the first network entity.

Optionally, the first determining module 1003 is configured for suspending a part or all of the first PDU/PDP bearers.

The second transceiving module 1002 is configured for generating a second message to create a second data connection in a second PLMN.

The second message may include one or more of following parameters: Single Network Slice Selection Assistance Information (S-NASSAI), which is used to identify a network slice to be selected; information of requested Data Network Name (DNN) in the 5GS, which is used to indicate the UPF to be selected or information of an Access Point Name (APN) in the 4G EPC network; information of Service and Session Continuity Mode (SSC Mode). The information of the requested DNN or the information of the APN may be internet or IMS', wherein the IMS' is used to indicated an IMS control plane only.

Specifically, the second transceiving module 1003 is configured for performing a second Register/Attach procedure with a third core network node in the second PLMN; establishing a second PDU/PDP bearer with a fourth core network node in the second PLMN; establishing a secure association with the N3IWF/ePDG using the second PDU/PDP bearer.

In an example, the secure association may be a secure tunnel such as an IPSec tunnel.

Optionally, the second transceiving module 1002 is configured for performing a second IMS registration with the first network entity via the second data connection, wherein performing the second IMS registration with the first network entity includes sending a second feature tag used to indicate a second access type of the second IMS registration, and the first private user ID to the first network entity.

In an example, the second IMS registration is performed using the created secure association.

Optionally, the first access type of the first IMS registration is different from the second access type of the second IMS registration.

In an example, the first access type is a 3GPP access, e.g., a cellular access, and the second access type is a non-3GPP access or an access from a MUSIM ME. Specifically, the non-3GPP access in the present disclosure may be a control-plane access only.

Specifically, the second transceiving module 1002 is configured for: sending, to the first network entity, the second feature tag and the first private user ID obtained from the first SIM; receiving and storing a second authorization token sent from the first network entity.

In an example, the second authorization token includes a second value (such as a second random number) generated by the first network entity through performing a second computation using the second register ID, the second contact address, the first URI, and a second key known to both the first network entity and the ME.

Optionally, the calculating module 1004 is further configured for: performing the same second computation using the second value, the second register ID, the second contact address, the first URI, and the second key; generating a second token value. The second transceiving module 1002 is further configured for sending the second token value to the first network entity.

Optionally, at least one of a second register ID and a second contact address (i.e. a second IP address) may further be sent to the first network entity together with sending the second feature tag and the first private user ID during the second IMS registration.

Optionally, the second transceiving module 1002 is further configured for receiving a first communication message including the second feature tag from the first network entity.

Optionally, the first communication message is received by the second transceiving module 1002 from the first network entity via the created secure association.

Optionally, the first communication message may include the second contact address (IP address 2).

Optionally, the first determining module 1003 is configured for determining a type of the first communication message; if the first communication message is a first session establishing message, determining to accept the first session establishing message. The second transceiving module 1002 is further configured for sending a response to the first network entity to indicate that the first private user ID is used for subsequent communication between a second network entity and the ME, wherein the response includes the first contact address.

Optionally, the response may further include one or more of the first private user ID, the first register ID, and the first feature tag.

In an example, the second network entity may be an Application Server (AS) in the 5GS or in the 4G EPC network.

Optionally, the first transceiving module 1001 is further configured for resuming any of the suspended first PDU/PDP bearers.

Specifically, the first transceiving module 1001 is further configured for resuming any of the suspended first PDU/PDP bearers by sending a Non-Access Stratum (NAS) message to an Access and Mobility Management Function (AMF) entity.

Optionally, the second transceiving module 1002 is configured for receiving a second session establishing message from the second network entity, wherein the second session establishing message includes the first feature tag.

Optionally, the first determining module 1003 is further configured for determining, whether the first IMS registration or the second IMS registration needs to be de-registered.

Optionally, the second transceiving module 1002 is further configured for: if the first IMS registration is determined to be de-registered, sending a second communication message via the second data connection to the first network entity, wherein the second communication message includes at least one of, but not limited to, the following: the first authorization token or resource token, the first contact address, the first register ID, the first URI, an indication of a task to be performed.

Optionally, the second transceiving module 1002 is further configured for: if the second IMS registration is determined to be de-registered, sending a third communication message via the first data connection to the first network entity, wherein the third communication message may include at least one of the second authorization token or resource token, the second contact address, the second register ID, and an indication of a task to be performed.

Specifically, the indication of the task to be performed may be a de-registration task.

Optionally, the first determining module 1003 is further configured for determining whether the first IMS registration or the second IMS registration needs to be refreshed.

Optionally, the second transceiving module 1002 is further configured for: if the first IMS registration needs to be refreshed, sending a fourth communication message via the second data connection to the first network entity, wherein the fourth communication messages includes at least one of, but being not limited to, following: an indication of a task to be performed, the first register ID, the first URI, and the first contact address.

Optionally, the second transceiving module 1002 is further configured for: if the second IMS registration needs to be refreshed, sending a fifth communication message via the second data connection to the first network entity, wherein the fifth communication messages includes at least one of, but being not limited to, following: an indication of a task to be performed, the second register ID, the first URI, and the second IP address.

In an example, the determination on whether the first IMS registration or the second IMS registration needs to be refreshed may be made in consideration of following conditions: 1) whether one of following is received by the ME: information about the first IMS registration or the second IMS registration being expired, information about the first IMS registration or the second IMS registration not existing, information about a URI not associated with the first contact address or the second contact address, information about unauthorization of the ME to perform an action, or information about an action being not supported, or 2) whether a timer in the ME reaches a specific value.

Specifically, the indication of the task to be performed may be a refresh task.

Optionally, the first determining module 1003 is further configured for: if one of the above information is received or if the timer in the ME reaches the specific value, determining that the first IMS registration or the second IMS registration needs to be refreshed; and if the first IMS registration is determined to be refreshed, deleting a context associated with the first IMS registration. The first transceiving module 1001 is further configured for re-performing a first IMS registration with the first network entity using the first data connection.

Optionally, the first determining module 1003 is further configured for: if the second IMS registration is determined to be refreshed, deleting a context associated with the second IMS registration. The second transceiving module 1002 is further configured for re-performing a second IMS registration with the first network entity using the second data connection.

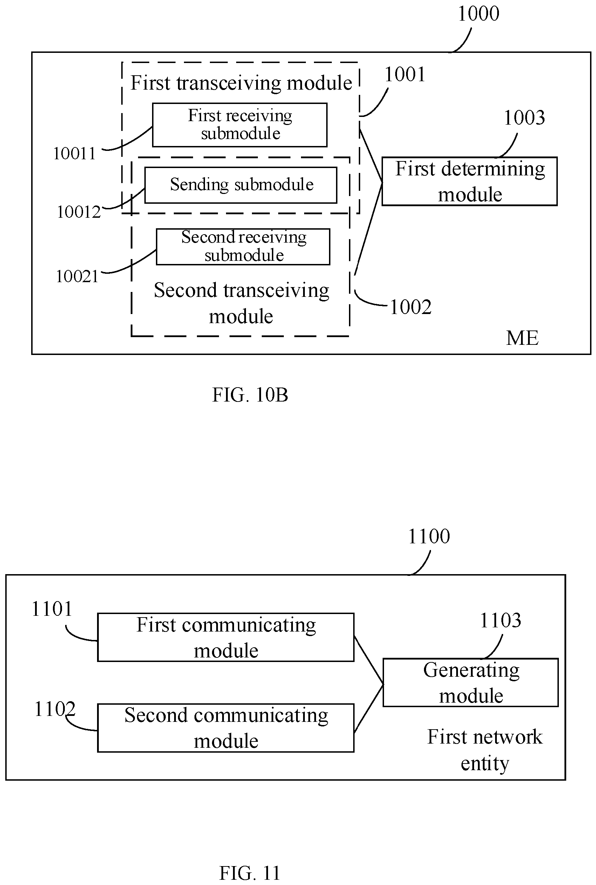

FIG. 10B is a detailed schematic structural diagram of the ME according to some embodiments of the present disclosure.

As shown in FIG. 10B, the first transceiving module 1001 may include a first receiving submodule 10011 for performing steps described above related to a receiving action of the first receiving module 1001, and a sending submodule 10012 for performing steps described above related to a sending action of the first transceiving module 1001; and the second transceiving module 1002 may include a second receiving submodule 10021 for performing steps described above related to a receiving action of the second transceiving module 1002, and the sending submodule 10012 for performing steps described above related to a sending action of the second transceiving module 1002. That is, the first transceiving module 1001 and the second transceiving module 1002 share the sending submodule 10012 for performing sending actions of the first transceiving module 1001 and the second transceiving module 1002.The ME 1000 is a mobile equipment capable of implementing all embodiments and examples of the mobile equipment in the above method embodiments, and the same technical effects can be achieved. Other details of the ME 1000 may be obtained by referring to the above descriptions of the ME in the above method embodiments and will not be described in further details herein to prevent duplication.

Based on a same inventive concept, some embodiments of the present disclosure provide an ME. The ME includes a first data-connection-creation module, a first IMS-registration module, a second data-connection-creation module, a second IMS-registration module, a receiving module, wherein the first data-connection-creation module is configured for generating a first message to create a first data connection in a first PLMN; the first IMS-registration module, configured for performing a first IMS registration via the first data connection with a first network entity in the first PLMN, wherein performing the first IMS registration includes sending a first feature tag used to indicate a first access type of the first IMS registration, and a private user identity obtained from a first Subscriber Identity Module (SIM) of the ME; the second data-connection-creation module is configured for generating a second message to create a second data connection in a second PLMN; the second IMS-registration module is configured for performing a second IMS registration via the second data connection, wherein performing the second IMS registration includes sending a second feature tag used to indicate a second access type of the second IMS registration, and the private user identity obtained from the first SIM, wherein the first access type is different from the second access type; a first receiving module is configured for receiving a first communication message including the second feature tag from the first network entity, and receiving a request from a second network entity, wherein the first access type is different from the second access type.

The ME is a mobile equipment capable of implementing all embodiments and examples of the mobile equipment in the above method embodiments, and the same technical effects can be achieved. Other details of the modules of the ME may be obtained by referring to the above descriptions of the ME in the above method embodiments and will not be described in further details herein to prevent duplication.

Based on the same inventive concept, some embodiments of the present disclosure provide a first network entity. FIG. 11 is a first schematic structural diagram of a first network entity according to some embodiments of the present disclosure. The first network entity 1100 includes a first communicating module 1101, a second communicating module 1102, and a generating module 1103.

The first communicating module 1101 is configured for performing a first IMS registration of a ME.

Specifically, the first communicating module 1101 is configured for receiving a first feature tag and a first private user ID from the ME in the first IMS registration via a first data connection when performing the first IMS registration of the ME.

Optionally, the first communicating module 1101 is configured for receiving at least one of a first register ID (RegID) and a first contact address from the ME in the first IMS registration via the first data connection.

In an example, the first data connection may be any bearer or session that may be used to transmit data. In the embodiments of the present disclosure, the first data connection may be a first Protocol Data Unit (PDU)/Packet Data Protocol (PDP) bearer or session. The first network entity may be a Serving Call Session Control Function (S-CSCF) entity in the 5GS.

The first contact address may be a first IP address (IP address 1) for the first IMS registration.

Optionally, the first feature tag is used to indicate the first access type of the first IMS registration. In an example, the first access type of the first IMS registration may be a 3GPP access, e.g., a Cellular access.

Specifically, the first communicating module 1101 is configured for receiving the first register ID and the first contact address from the ME; and the generating module 1103 is configured for generating a first authorization token or resource token by performing a first computation using the first register ID, the first contact address, the first public user identity (e.g. a first URI) associated with the first IMS registration, and a first key known to both the first network entity and the ME.

Specifically, the first communication module 1101 is configured for sending the first authorization token or resource token to the ME; and receiving a first token value from the ME.

In an example, the first authorization token includes a first value, such as a first random number.

Specifically, the generating module 1103 is configured for comparing the first token value with a first value stored in the first network entity, and based on a result of the comparison, determining whether the first IMS registration is successful.

Specifically, the first communicating module 1101 is configured for sending the first feature tag and the first contact address of the ME to a second network entity using a first third-party registration.

Specifically, if the generating module 1103 determines that the first IMS registration is successful, the first communicating module 1101 is configured for sending the first feature tag and the first contact address to the second network entity. The second network entity may be an Application Server.

Optionally, the first communication module 1101 is configured for sending the first public user ID to the second network entity using the first third-party registration together with the first feature tag and the first contact address.

Optionally, the first communicating module 1101 is configured for performing a second IMS registration of the ME.

Specifically, the first communicating module 1101 is configured for receiving, from the ME via a second data connection in the second IMS registration, a second feature tag used to indicate a second access type of a second IMS registration and the first private user ID.

Specifically, the first communicating module 1101 is further configured for further receiving at least one of a second register ID (RegID) and a second contact address from the ME in the second IMS registration via the second data connection.

Optionally, at least one of the first private user ID associated with the first SIM, the second feature tag used to indicate the second access type of the second IMS registration, the second register ID (RegID), the second contact address may be received by the first communicating module 1101 through a third network entity in the first PLMN via the second data connection.

In an example, the second data connection may be a second Protocol Data Unit (PDU)/Packet Data Protocol (PDP) bearer or session.

In an example, the second IMS registration is performed using the created secure association. The second contact address may be a second IP address (IP address 2) for the second IMS registration. The first register ID is different from the second register ID.

Optionally, the first access type of the first IMS registration is different from the second access type of the second IMS registration. The second feature tag is used to indicate the second access type of the second IMS registration, such as a non-3GPP access, or indicate that the access is from a Multi-SIM capable ME (MUSIM ME).

Optionally, in a process of performing the second IMS registration, the first communicating module 1101 is configured for receiving the second register ID and the second contact address from the ME; the generating module 1103 is configured for generating a second authorization token or resource token by performing a second computation using the second register ID, the second contact address, the first public user identity (e.g the first URI) associated with the second IMS registration, and a second key known to both the first network entity and the ME. The first communicating module 1101 is further configured for sending the second authorization token or resource token to the ME; and receiving a second token value from the ME.

In an example, the second authorization token includes a second value, such as a second random number.

Specifically, the generating module 1103 is further configured for comparing the second token value with a second value stored in the first network entity, and based on a result of the comparison, determining whether the second IMS registration is successful.

The second communicating module 1103 is configured for sending the second feature tag and the second contact address to the second network entity using a second third-party registration.

Specifically, if the generating module 1103 determines that the second IMS registration is successful, the second communicating module 1102 is configured for sending the first feature tag and the first contact address to the second network entity.

Optionally, the second communicating module 1102 is configured for receiving a third session establishing message containing the first URI of the ME and sending the third session establishing message to the second network entity.

Optionally, the second communicating module 1102 is configured for receiving a fourth session establishing message containing the second feature tag of the ME from the second network entity. Optionally, the fourth session establishing message further includes the second contact address.

Optionally, the first communicating module 1101 is configured for sending a first communication message to the ME.

Specifically, the first communication message includes the second feature tag. Optionally, the first communication message further includes the second contact address.

Optionally, the first communicating module 1101 is further configured for receiving a second communication message or a third communication message from the ME via the second data connection, wherein the second communication message includes at least one of, but not limited to, the following: the first authorization token or resource token, the first contact address, the first register ID, a first URI, an indication of a task to be performed; the third communication message may include at least one of the second authorization token or resource token, the second contact address, the second register ID, and an indication of a task to be performed; and the generating module 1103 is further configured for determining whether the ME is to perform a de-registration procedure, based on the second communication message or the third communication message, wherein if the second communication message is received, the first IMS registration is determined to be de-registered, and if the third communication message is received, the second IMS registration is determined to be de-registered; and the first communicating module 1101 is further configured for performing a de-registration procedure of the ME.

Specifically, the indication of the task to be performed may be a de-registration task.

Optionally, the first communicating module 1101 is further configured for receiving a fourth communication message or a fifth communication message from the ME via the second data connection, wherein the fourth communication message includes at least one of, but being not limited to, following: an indication of a task to be performed, the first register ID, the first public user identity (e.g., the first URI), and the first contact address; the fifth communication message may include at least one of, but being not limited to, following: an indication of a task to be performed, the second register ID, the first URI, and the second contact address; the generating module 1103 is further configured for determining whether the ME is to perform a refresh procedure, based on the fourth communication message or the fifth communication message, wherein if the fourth communication message is received, the first IMS registration is determined to be refreshed, and if the fifth communication message is received, the second IMS registration is determined to be refreshed; and the first communicating module 1101 is further configured for performing a refresh procedure of the ME.

Optionally, if one of following event occurs: a first event that the first IMS registration or the second IMS registration is expired, a second event that the first IMS registration or the second IMS registration does not exist, a third event that a URI is not associated with the first contact address or the second contact address, a fourth event that the ME is not authorized to perform an action, and a fifth event that an action is not supported, the first communicating module 1101 is further configured for sending information of the event to the ME to inform the ME of an error.

Specifically, the information of the event may be an error code associated with one of the first through fifth events.

Specifically, the indication of the task to be performed may be a refresh task.

Optionally, the first communicating module 1101 is further configured for: if the first IMS registration is determined to be refreshed, deleting a context associated with the first IMS registration, and re-performing a first IMS registration with the ME using the first data connection; if the first IMS registration is determined to be refreshed, deleting a context associated with the second IMS registration, and re-performing a first IMS registration with the ME using the second data connection.

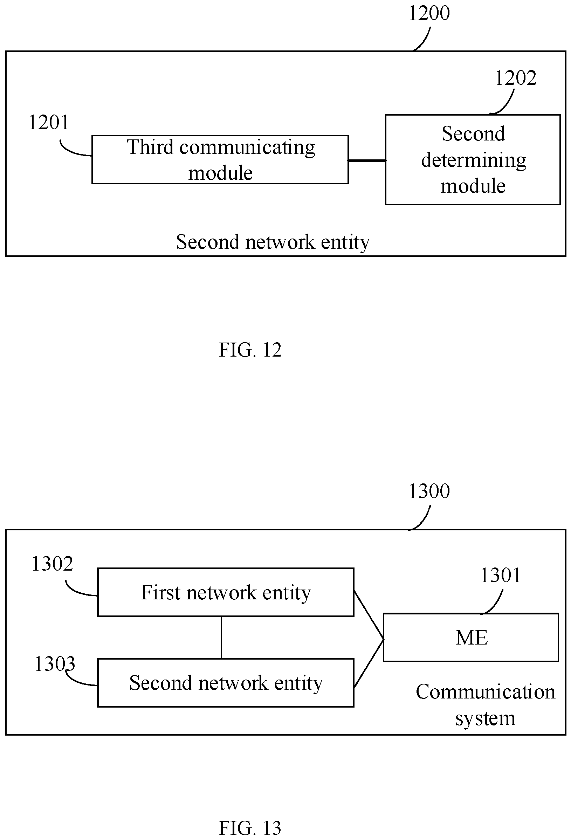

Based on the same inventive concept, some embodiments of the present disclosure further provide a second network entity. FIG. 12 is a first schematic structural of a second network entity according to some embodiments of the present disclosure.

The second network entity may be an Application Server. The second network entity 1200 may include a third communicating module 1201 and a second determining module 1202.

The third communicating module 1201 is configured for receiving and storing a first feature tag from a first network entity using a first third-party registration. Optionally, one or more of the first contact address and the first public user ID is also received and saved using the first third-part registration.

Specifically, the first contact address may be a first IP address (IP address 1) for the first IMS registration. The first network entity may be an S-CSCF entity in the IMS subsystem connected to the 5GS.

The first feature tag is used to indicate the first access type of the first IMS registration. In an example, the first access type of the first IMS registration may be a 3GPP access, e.g., a Cellular access.

Optionally, the third communicating module 1201 is further configured for receiving and storing a second feature tag from the first network entity using a second third-party registration. Optionally, the second contact address is also received and saved using the second third-party registration.

Specifically, the second contact address may be a second IP address (IP address 2) for the second IMS registration. The second feature tag is used to indicate the second access type of the second IMS registration, such as a non-3GPP access, or indicate that the access is from a Multi-SIM capable ME (MUSIM ME).

Optionally, the third communicating module 1201 is further configured for receiving a third session establishing message containing the first public user identity (e.g. the first URI) from the first network entity.

Optionally, the first URI may be associated with the first SIM of the ME.

The second determining module 1202 is configured for determining whether to send a fourth session-establishing message to the first network entity based on the second contact address and the second feature tag of the second IMS registration.

Optionally, the third communicating module 1201 is further configured for: if determining to send, then sending the fourth session establishing message containing the second feature tag of the ME to the first network entity. Optionally, the fourth session establishing message further includes the second contact address.

Optionally, the third communicating module 1201 is further configured for: receiving a response from the ME; if the response includes the first contact address, sending a fifth session establishment message using the first feature tag and the first contact address of the first IMS registration.

Optionally, the response may further include one or more of the first private user ID associated with the first SIM, the first Register ID, and the first feature tag.

Optionally, the third communicating module 1201 is further configured for: sending the first communication message to the ME.

Optionally, the first communication message is a first session establishing message (e.g., a SIP INVITE message) including the second feature tag of the ME. Optionally, the first communication message further includes the second contact address.

Through the above technical solutions of the present disclosure, it may be ensured that a majority of services that could be potentially missed in the ME would be IMS-based service for the first SIM of the ME, and no paging procedure needs to be performed, and whether the ME is in a Radio Resource Control (RRC) Inactive state or an RRC Idle state, the ME may be reached for performing a SIP communication. Thus, a system resource is saved and misleading of reachability of the ME may be prevented.

Based on the same inventive concept, some embodiments of the present disclosure further provide a communication system. FIG. 13 is a schematic structural diagram of the communication system according to some embodiments of the present disclosure. The communication system 1300 may include a ME 1301, a first network entity 1302, and a second network entity 1303. The first network entity 1302 and the second network entity 1303 is in a first PLMN.

Optionally, the communication system 1300 may further include a first core network node in the first PLMN and a second core network node in a second PLMN.

The ME 1301, the first network entity 1302 and the second network entity 1303 may implement the steps of the communication method performed by the ME, the first network entity and the second network entity above described with reference to FIG. 6, and achieve the same technical effects. To avoid repetition, details of this communication system can be obtained from the above, and will not be described herein.

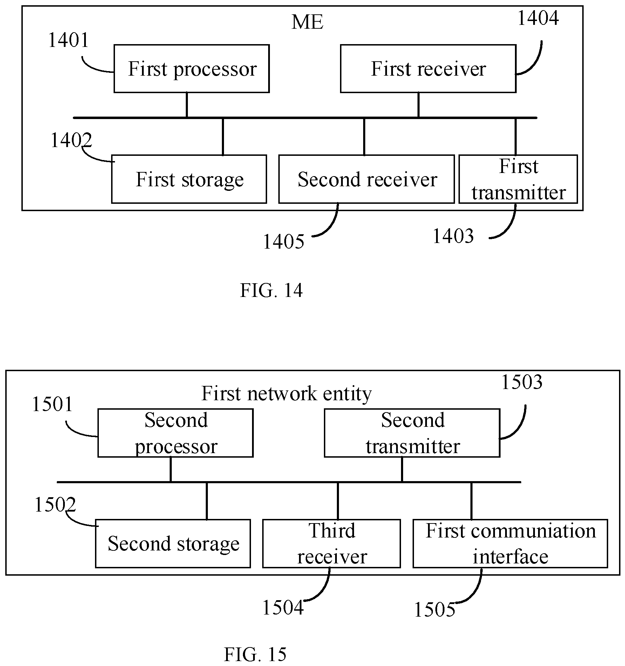

Based on the same inventive concept, some embodiments of the present disclosure further provide a ME. FIG. 14 is a second schematic structural diagram of the ME according to some embodiments of the present disclosure. The ME may include a first processor 1401, a first storage 1402, a first transmitter 1403, a first receiver 1404, and a second receiver 1405, wherein the first processor 1401, the first storage 1402 and the first transceiver 1402 are connected together via a bus system. The first storage 1402 is configured to store thereon programs executable by the first processor 1401. The first receiver 1404 is configured to receive information under a control of the first processor 1401, the second receiver 1405 is configured to receive information under a control of the first processor 1401, and the first transmitter 1043 is configured to transmit information under a control of the first processor 1401. When the programs are executable by the first processor 1401, the first processor 1401 implements the steps of the communication method performed by the ME described above, and the same technical effects may be achieved. To avoid repetition, the details will be omitted herein.

Based on the same inventive concept, some embodiments of the present disclosure further provide a first network entity. FIG. 15 is a second schematic structural diagram of the first network entity according to some embodiments of the present disclosure. The first network entity may include a second processor 1501, a second storage 1502, a second transmitter 1503, a third receiver 1504, and a first communication interface 1505, wherein the second processor 1501, the second storage 1502, the second transmitter 1503, the third receiver 1504 and the first communication interface 1505 are connected together via a bus system. The second storage 1502 is configured to store thereon programs executable by the second processor 1501. The second transmitter 1503 is configured to transmit information to a ME under a control of the second processor 1501, and the third receiver 1504 is configured to receive information from the ME under a control of the second processor 1501, and the first communication interface 1505 is configured to communication with a core network entity. When the programs are executable by the second processor 1501, the second processor 1501 implements the steps of the communication method performed by the first network entity described above, and the same technical effects may be achieved. To avoid repetition, the details will be omitted herein.

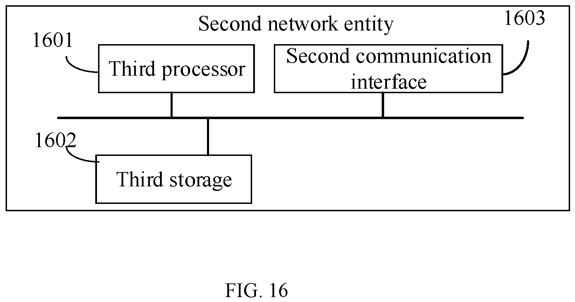

Based on the same inventive concept, some embodiments of the present disclosure further provide a second network entity. FIG. 16 is a third schematic structural diagram of the second network entity according to some embodiments of the present disclosure. The second network entity may include a third processor 1601, a third storage 1602, and a second communication interface 1603, wherein the third processor 1601, the third storage 1602 and the third transceiver 1602 are connected together via a bus system. The third storage 1602 is configured to store thereon programs executable by the third processor 1601. The second communication interface 1603 is configured to communicate with a core network entity under a control of the third processor 1601. When the programs are executable by the third processor 1601, the third processor 1601 implements the steps of the communication method performed by the second network entity described above, and the same technical effects may be achieved. To avoid repetition, the details will be omitted herein.

Some embodiments of the present disclosure also provide a computer readable storage medium. The computer readable storage medium includes a computer program stored on the computer readable storage medium, wherein in a case that the computer program is executed by a processor, the computer program implements various steps of the communication method performed by the ME, or steps of the communication method performed by the first network entity, and steps of the communication method performed by the second network entity, and the same technical effect may be achieved, which will not be repeated herein to avoid repetition. The computer readable storage medium may be, for example, a Read-Only Memory (ROM), a Random Access Memory (RAM), a magnetic disk or an optical disk, etc.

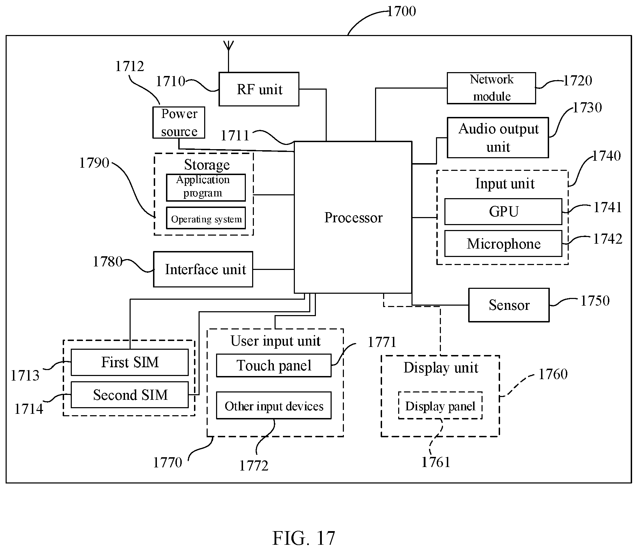

FIG. 17 is a schematic diagram of a hardware structure of a ME for implementing some embodiments of the present disclosure.

The ME 1700 includes, but is not limited to, a radio frequency (RF) unit 1710, a network module 1720, and an audio output unit 1730, an input unit 1740, a sensor 1750, a user input unit 1770, an interface unit 1780, a storage 1790, a processor 1711, a power source 1712, a first SIM module 1713 and a second SIM module 1714, and other components. Those skilled in the art may understand that a structure of the ME shown in Fig.17 does not constitute a limitation on the ME, and the ME may include more or fewer components than those shown in the figure, or some combined components, or different arrangements of components. In some embodiments of the present disclosure, the ME includes, but is not limited to, a mobile phone, a tablet computer, a notebook computer, a palmtop computer, a car-mounted ME, a wearable device, a pedometer, and the like.

Optionally, the ME 1700 further includes a display unit 1760.

The radio frequency unit 1710 may be used for receiving and transmitting a signal in a process of sending and/or receiving information. In general, the radio frequency unit 1710 includes, but is not limited to, an antenna, at least one amplifier, a transceiver, a coupler, a low noise amplifier, a duplexer, and the like. In addition, the radio frequency unit 1710 may also communicate with a network and other devices through a radio communication system.

The ME provides a wireless broadband internet access for a user via the network module 1720, such as assisting the user in sending and receiving emails, surfing web pages, accessing streaming media, and the like.

The audio output unit 1730 may convert audio data received by the radio frequency unit 1710 or the network module 1720 or stored in the storage 1790 into an audio signal and output as sound. The audio output unit 1730 may also provide audio output (e.g., a call signal reception sound, a message reception sound, etc.) related to a specific function performed by the ME 1700. The audio output unit 1730 includes a speaker, a buzzer, a receiver, and the like.

The input unit 1740 is used to receive an audio or video signal. The input unit 1740 may include a graphics processor (Graphics Processing Unit (GPU)) 1741 and a microphone 1742. The graphics processor 1741 processes image data of still pictures or video obtained by an image capture device (such as a camera) in a video capture mode or an image capture mode. The processed image frame may be displayed on the display unit 1760. Image frames processed by the graphics processor 1741 may be stored in the storage 1790 (or another storage medium) or sent via the radio frequency unit 1710 or the network module 1720. The microphone 1742 may receive sound and be capable of processing such sound as audio data. The processed audio data may be converted, in a case of a telephone call mode, into a format output transmittable to a mobile communication base station via the radio frequency unit 1710.

The ME 1700 also includes at least one sensor 1750, such as a light sensor, a motion sensor, and other sensors. In particular, the light sensor includes: an ambient light sensor that can adjust the brightness of the display panel 1761 according to the intensity of ambient light; and a proximity sensor that can turn off the display panel 1761 and/or a backlight in a case that the ME 1700 moves close to an ear. As one type of motion sensor, an accelerometer sensor can detect a magnitude of acceleration in various directions (generally in three axis directions), detect a magnitude and a direction of gravity when the accelerometer sensor is stationary, and can be used to recognize a posture of a ME (such as a horizontal/vertical screen switching, related games, magnetometer attitude calibration), vibration-recognition related functions (such as a pedometer, a knock); the sensor 1750 may further include a fingerprint sensor, a pressure sensor, an iris sensor, a molecular sensor, a gyroscope, a barometer, a hygrometer, a thermometer, an infrared sensor, and the like, which will not be described here.

If the ME 1700 includes the display unit 1760, then the display unit 1760 is used to display information inputted by a user or information provided to the user. Optionally, the display unit 1760 may include a display panel 1761. The display panel 1761 is configured in a form of a Liquid Crystal Display (LCD) and an Organic Light-Emitting Diode (OLED) or the like.

If the ME 1700 includes the input unit 1770, then the user input unit 1770 may be operable to receive inputted numeric or character information and to generate key signal inputs related to user settings and function control of the ME. Specifically, the user input unit 1770 includes a touch panel 1771 and other input devices 1772. The touch panel 1771, also referred to as a touch screen, may collect touch operations on or near the touch panel by the user (such as touch operations of the user using any suitable object or accessory, such as a finger, a stylus, and the like on or near the touch panel 1771). The touch panel 1771 may include two parts, i.e., a touch detector and a touch controller, wherein the touch detector detects a touch orientation of the user, detects a signal caused by the touch operation, and transmits the signal to the touch controller; the touch controller receives touch information from the touch detector, converts the touch information into contact coordinates, sends the contact coordinates to the processor 1711, receives a command from the processor 1711, and executes the command from the processor 1711. In addition, the touch panel 1771 may also be implemented in various types such as a resistive type, a capacitive type, an infrared ray type, and a surface acoustic wave type. The user input unit 177 may also include other input devices 1772 in addition to the touch panel 1771. Specifically, other input devices 1772 may include, but are not limited to, a physical keyboard, function buttons (such as volume control buttons, switch buttons, etc.), a trackball, a mouse, and an operating lever, which are not described herein.

Further, the touch panel 1771 may be overlaid on the display panel 1761. When the touch panel 1771 detects a touch operation on or near the touch panel 1771, the touch panel 1771 transmits information of the touch operation to the processor 1711 to determine a type of a touch event. The processor 1711 then provides a corresponding visual output on the display panel 1761 according to the type of the touch event. Although in FIG. 17, the touch panel 1771 and the display panel 1761 are two separate components used to implement input and output functions of the ME, the touch panel 1771 and the display panel 1761 in some embodiments may be integrated to realize input and output functions of the ME, and are not limited herein. The touch panel may also be a keyboard.

The interface unit 1780 is an interface for connecting an external device to the ME 1700. For example, the external device may include a wired or wireless headset port, an external power source (or a battery charger) port, a wired or wireless data port, a memory card port, a port for connecting a device having an identification module, an audio input/output (I/O) port, a video I/O port, a headphone port, etc. The interface unit 1780 may be used to receive input (e.g., data information, power and the like) from an external device and transmit the received input to one or more elements within the ME or may be used to transmit data between the ME 1700 and an external device.

The storage 1790 may be used to store software programs and various types of data. The storage 1790 may mainly include a storage program region and a storage data region, wherein the storage program region may store an operating system, an application program required by at least one function, such as a sound playing function, an image playing function, and the like; the storage data region may store data (such as audio data, phonebook, etc.) created according to usage of a mobile phone. Further, the storage 1790 may include a high-speed random access memory, and may also include a non-volatile storage, such as at least one magnetic disk storage device, a flash memory device, or other volatile solid-state storage devices.

The processor 1711 is a control center of the ME, connects various parts of the entirety of the ME using various interfaces and lines, and the processor 1711 performs various functions of the ME and processes data, by running or executing a software program and/or a module stored in the storage 1790 and invoking data stored in the storage 1790, thereby integrally monitoring the ME. The processor 1711 may include one or more processing units; optionally, the processor 1711 may be integrated with an application processor and a modem processor, wherein the application processor primarily handles operating systems, user interfaces, application programs, and the like, and the modem processor primarily handles wireless communication. It will be appreciated that the above modem processor may not be integrated into the processor 1711.

The ME 1700 may also include a power source 1712, such as a battery, for powering various components, optionally the power source 1712 may be logically connected to the processor 1711 through a power management system. Thereby, functions of charging management, discharging management, and power consumption management are realized by the power management system.

In addition, the ME 1700 includes some functional modules that are not shown and will not be described again here.

The computer readable storage medium in the present disclosure may be a transitory storage medium or a non-transitory storage medium.

Through the above technical solutions of the present disclosure, it may be ensured that a majority of services that could be potentially missed in the ME would be IMS-based service for the first SIM of the ME, and no paging procedure needs to be performed, and whether the ME is in a Radio Resource Control (RRC) Inactive state or an RRC Idle state, the ME may be reached for performing a SIP communication. Thus, a system resource is saved and misleading of reachability of the ME may be prevented.

The processors in the present disclosure may be an integrated circuit chip having a processing capability of signals. During an implementation process, steps of the method may be realized by hardware in a form of integrated logical circuits in the processors, or by software in a form of instructions. The modules in the present disclosure may be a general purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components. Various methods, steps, and logical block diagrams disclosed in some embodiments of the present disclosure may be implemented or carried out. The general purpose processor may be a microprocessor, any conventional processor, etc. The steps of the methods disclosed with reference to the embodiments of the present disclosure may be directly embodied as hardware in the form of a coding processor, or performed by the hardware in the coding processor and software modules. The software modules may reside in well-established storage medium in the art, such as a RAM, a flash memory, a ROM, a PROM or an EEPROM, a register.

Expressions of "at least one of A, B and C", "one or more of A, B and C", and "A, B, and/or C" herein mean that A exists only, B exists only, C exist only, both A and B exist only, both B and C exist only, both A and C exist only, or all of A, B, and C exist.

The aforementioned implementations are merely specific implementations of the present disclosure, but the scope of the present disclosure is by no means limited thereto. The scope of the present disclosure is determined by the scope of the claims.

## Claims

1. A communication method, comprising:
generating (S101), by a mobile equipment, ME, a first message to create a first data connection in a first Public Land Mobile Network, PLMN;
performing (S102), by the ME, a first IP Multi-Media Subsystem, IMS, registration via the first data connection with a first network entity in the first PLMN, wherein performing the first IMS registration comprises: sending a first feature tag used to indicate a first access type of the first IMS registration, a first private user identity obtained from a first Subscriber Identity Module, SIM, of the ME, and a first contact address to the first network entity;
generating (S103), by the ME, a second message to create a second data connection in a second PLMN;
the method being **characterized in**:
performing (S104), by the ME, a second IMS registration with the first network entity via the second data connection, wherein performing the second IMS registration comprises sending a second feature tag used to indicate a second access type of the second IMS registration, the first private user identity, and a second contact address to the first network entity, wherein the second feature tag is used to indicate that the second IMS registration is using a non-3GPP access via cellular access technology or to indicate that the second contact address is to be used for only control plane message among control plane messages and media;
receiving (S105), by the ME, a first communication message comprising the second feature tag from the first network entity; and
when the first communication message is a first session establishing message, determining, by the ME, to accept the first session establishing message, and sending a response to a second network entity to inform the second network entity to choose the first contact address associated with the first IMS registration; wherein the first session establishing message comprises the second contact address;
tuning or going back, by the ME, to the first PLMN and resuming the suspended first data connection in the first PLMN, wherein the first data connection is a first Protocol Data Unit, PDU, / Packet Data Protocol, PDP, bearer or session;
receiving (S106), by the ME, a second session establishing message from the second network entity, the second session establishing message comprising the first feature tag;
wherein the first access type is different from the second access type, the first contact address is different from the second contact address, and the ME is provided with more than one SIMs.

2. The communication method according to claim 1, wherein, the second IMS registration is performed via a secure tunnel created based on the second data connection;
wherein the secure tunnel is created using a non-3GPP access mechanism that goes to a Non-3GPP InterWorking Function, N3IWF, /enhanced Packet Data Gateway, ePDG, in the first PLMN.

3. The communication method according to claim 1, wherein, performing (S102) the first IMS registration further comprises sending a first register Identifier, ID, by the ME;
performing the second IMS registration further comprises sending a second register ID;
the first register ID is different from the second register ID;
wherein the first session establishing message is a session initiation protocol, SIP, INVITE message;
wherein the response comprises one or more of the first register ID, the first contact address, and the first feature tag.

4. The communication method according to any one of claims 1 to 3, wherein after performing (S102), by the ME, the first IMS registration with the first network entity, and before creating the second data connection with the second PLMN, the communication method further comprises:
suspending, by the ME, a part or all of first PDU/PDP bearers, wherein the first PDU/PDP bearers are created before performing, by the ME, the first IMS registration with the first network entity;
wherein, after sending the response to the first network entity, and before receiving the second session establishing message from the second network entity, the communication method further comprises:
resuming, by the ME, any of the suspended first PDU/PDP bearers;
wherein, the resuming, by the ME, any of the suspended PDU/PDP bears comprises resuming, by the ME, any of the suspended PDU/PDP bears by sending a Non-Access Stratum, NAS, message to an Access and Mobility Management Function, AMF, entity.

5. The communication according to any one of claims 1 to 4, wherein,
the performing, by the ME, the first IMS registration with the first network entity, comprises:
receiving and storing, by the ME, a first authorization token or resource token associated with the first IMS registration from the first network entity;
the communication method further comprises:
if the first IMS registration needs to be deregistered or refreshed, sending, by the ME, a second communication message via the second data connection to the first network entity, wherein the second communication message comprises at least one of:
the first authorization token or resource token,
a first contact address,
a first register ID,
a first Uniform Resource Identifier, URI,
an indication of a task to be performed;
or,
the performing, by the ME, the second IMS registration with the first network entity, comprises:
receiving and storing, by the ME, a second authorization token or resource token associated with the second IMS registration;
the communication method further comprises:
if the second IMS registration needs to be deregistered or refreshed, sending, by the ME, a third communication message via the first data connection to the first network entity, wherein the third communication message comprises at least one of the following:
the second authorization token or resource token,
a second contact address,
a second register ID,
a first URI,
an indication of a task to be performed,
wherein the indication of the task to be performed comprises a refresh task or a deregister task.

6. The communication according to claim 5, wherein, if one of following information is received by the ME: information about the first IMS registration or the second IMS registration being expired, information about the first IMS registration or the second IMS registration not existing, information about a URI not associated with the first contact address or the second contact address, information about unauthorization of the ME to perform an action, or information about an action being not supported, or if a timer in the ME reaches a specific value,
the communication method further comprises:
if the second IMS registration is determined to be refreshed, deleting, by the ME, a context associated with the second IMS registration, and re-performing a second IMS registration with the first network entity using the second data connection;
if the first IMS registration is determined to be refreshed, deleting, by the ME, a context associated with the first IMS registration, and re-performing a first IMS registration with the first network entity using the first data connection;
the first authorization token comprises a first value generated by the first network entity through performing a first computation using one or more of the first register ID, the first contact address, the first URI, and a first key known to both the first network entity and the ME, the communication method further comprises:
performing the first computation by the ME using at least one of the first, the first register ID, the first contact address, the first URI, and the first key;
determining a first token value; and
sending the first token value to the first network entity by the ME;
or the second authorization token comprises a second value generated by the first network entity through performing a second computation using one or more of the second register ID, the second contact address, the first URI, and a second key known to both the first network entity and the ME, the communication method further comprises:
performing the second computation by the ME using at least one of the second register ID, the second contact address, the first URI, and the second key;
determining, by the ME, a second token value; and
sending the second token value to the first network entity by the ME.

7. A communication method, comprising:
receiving (S201) a first message from a mobile equipment, ME, by a first network entity to create a first data connection in a first Public Land Mobile Network, PLMN;
performing, by the first network entity, a first IP Multi-Media Subsystem, IMS, registration via the first data connection of the ME, wherein performing the first IMS registration comprises: receiving a first feature tag used to indicate a first access type of the first IMS registration, a first private user identity obtained from a first Subscriber Identity Module, SIM, of the ME, and a first contact address to the first network entity;
receiving (S203) a second message from the ME by the first network entity to create a second data connection in a second PLMN;
the method being **characterized in**;
performing a second IMS registration via the second data connection of the ME by the first network entity, wherein performing the second IMS registration comprises receiving a second feature tag used to indicate a second access type of the second IMS registration; , the first private user identity, and a second contact address from the ME, wherein the second feature tag is used to indicate that the second IMS registration is using a non-3GPP access via cellular access technology or to indicate that the second contact address is to be used for only control plane message among control plane messages and media;
sending a first communication message comprising the second feature tag to the ME by the first network entity, wherein the first communication message is a first session establishing message, wherein the first session establishing message comprises the second contact address; and the first data connection is a first Protocol Data Unit, PDU, / Packet Data Protocol, PDP, bearer or session;
receiving (S207) a response from the ME by the first network entity and sending the response to a second network entity; wherein, the response message is used to inform the second network entity to choose the first contact address associated with the first IMS registration; and
receiving a second session establishing message from the second network entity; andsending, by the first network entity, the second session establishing message to the ME (S209), the second session establishing message comprising the first feature tag;
wherein the first access type is different from the second access type, the first contact address is different from the second contact address, and the ME is provided with more than one SIMs.

8. The communication method according to claim 7, wherein, the second IMS registration is performed via a secure tunnel created based on the second data connection;
wherein the secure tunnel is created using a non-3GPP access mechanism that goes to N3IWF/ePDG in the first PLMN.

9. The communication method according to claim 7, wherein,
when performing the first IMS registration, the communication method further comprises receiving a first register Identifier, ID, from the ME by the first network entity;
when performing the second IMS registration, the communication method further comprises receiving a second register ID;
the first register ID is different from the second register ID;
wherein the response is further used to indicate that the first private user identity is used for subsequent communication between the second network entity and the ME, and the first session establishing message is a session initiation protocol, SIP, INVITE message.

10. The communication method according to claim 9, wherein after performing the first IMS registration, and before creating the second data connection, the communication method further comprises:
receiving a request by a third network entity in the first PLMN from the ME to suspend a part or all of first Protocol Data Unit, PDU/Packet Data Protocol, PDP, bearers, wherein the first PDU/PDP bearers are created before performing the first IMS registration;
wherein, after receiving the response from the ME by the first network entity, and before receiving the second session establishing message from the second network entity by the ME, the communication method further comprises:
receiving a Non-Access Stratum, NAS, message by an AMF entity to resume any of the suspended first PDU/PDP bearers.

11. The communication method according to any one of claims 7 to 10, wherein, performing the first IMS registration of the ME by the first network entity, comprises:
sending a first authorization token or resource token associated with the first IMS registration to the ME by the first network entity;
the communication method further comprises:
if the first IMS registration needs to be deregistered or refreshed, receiving a second communication message through the second data connection from the ME by the first network entity, wherein the second communication message comprises at least one of:
the first authorization token or resource token,
a first contact address,
the first register ID,
a first Uniform Resource Identifier, URI,
an indication of a task to be performed;
or,
performing the second IMS registration with the ME by the first network entity, comprises:
sending a second authorization token or resource token associated with the second IMS registration to the ME by the first network entity;
the communication method further comprises:
if the second IMS registration needs to be deregistered or refreshed, receiving a third communication message through the first data connection from the ME by the first network entity, wherein the third communication message comprises at least one of:
the second authorization token or resource token,
a second contact address,
a second register ID,
the first URI, and
an indication of a task to be performed.

12. The communication method according to claim 11, wherein, if one of following information is received by the ME: information about the first IMS registration or the second IMS registration being expired, information about the first IMS registration or the second IMS registration not existing, information about a URI not associated with the first IP address or the second IP address, information about unauthorization of the ME to perform an action, or information about an action being not supported,
the communication method further comprises:
re-performing a second IMS registration with the ME by the first network entity based on the second data connection;
the first authorization token comprises a first value generated by the first network entity through performing a first computation using one or more of the first register ID, the first contact address, a first URI associated with the first IMS registration, and a first key known to both the first network entity and the ME, the communication method further comprises:
receiving a first token value from the ME by the first network entity, wherein the first token value is generated by the ME using at least one of the first register ID, the first contact address, the first URI, and the first key;
comparing the first token value with a first value in the first network entity by the first network entity;
and/or
the second authorization token comprises a second value generated by the first network entity through performing a second computation using one or more of the second register ID, the second contact address, the first URI, and a second key known to both the first network entity and the ME, the communication method further comprises:
receiving a second token value from the ME by the first network entity, wherein the second token value is generated by the ME using at least one of the first register ID, the first contact address, the first URI, and the second key;
comparing the second token value with a second value in the first network entity by the first network entity.

13. A mobile equipment, ME, comprising:
a processor (1401), a storage (1402) and a program stored in the storage (1402) and executable by the processor (1401), wherein the program is executed by the processor (1401) to implement the communication method according to any one of claims 1 to 6.

14. A first network entity, comprising:
a processor (1501), a storage (1502) and a program stored in the storage (1502) and executable by the processor (1501), wherein the program is executed by the processor (1501) to implement the communication method according to any one of claims 7 to 12.

15. A computer-readable storage medium storing thereon a program, wherein the program is executed by a processor of a mobile equipment, ME, so as to implement the communication method according to any one of claims 1 to 6, or the program is executed by a processor of a first network entity so as to implement the communication method according to any one of claims 7 to 12.

## Patentansprüche

1. Kommunikationsverfahren, umfassend:
Erzeugen (S101) einer ersten Nachricht durch ein Mobilgerät, ME, um eine erste Datenverbindung in einem ersten öffentlichen Mobilfunknetz, PLMN, zu erstellen;
Durchführen (S102), durch das ME, einer ersten Registrierung eines IP-Multimedia-Subsystems, IMS, über die erste Datenverbindung mit einer ersten Netzinstanz in dem ersten PLMN, wobei das Durchführen der ersten IMS-Registrierung Folgendes umfasst: Senden eines ersten Merkmal-Tags, das verwendet wird, um einen ersten Zugangstyp der ersten IMS-Registrierung anzugeben, einer ersten privaten Benutzeridentität, die von einem ersten Teilnehmeridentitätsmodul, SIM, des ME erlangt wird, und einer ersten Kontaktadresse an die erste Netzinstanz;
Erzeugen (S103), durch das ME, einer zweiten Nachricht zum Erstellen einer zweiten Datenverbindung in einem zweiten PLMN;
wobei das Verfahren **gekennzeichnet ist, durch**:
Durchführen (S104), **durch** das ME, einer zweiten IMS-Registrierung mit der ersten Netzinstanz über die zweite Datenverbindung, wobei ein Durchführen der zweiten IMS-Registrierung ein Senden eines zweiten Merkmal-Tags, der verwendet wird, um einen zweiten Zugangstyp der zweiten IMS-Registrierung anzugeben, der ersten privaten Benutzeridentität und einer zweiten Kontaktadresse an die erste Netzinstanz umfasst, wobei der zweite Merkmal-Tag verwendet wird, um anzugeben, dass die zweite IMS-Registrierung einen Nicht-3GPP-Zugang über eine zelluläre Zugangstechnologie verwendet, oder um anzugeben, dass die zweite Kontaktadresse nur für eine Steuerebenennachricht unter den Steuerebenennachrichten und Medien verwendet werden soll;
Empfangen (S105), **durch** das ME, einer ersten Kommunikationsnachricht, umfassend das zweite Merkmal-Tag von der ersten Netzwerkeinheit; und
wenn die erste Kommunikationsnachricht eine erste Sitzungsaufbaunachricht ist, Bestimmen, **durch** das ME, die erste Sitzungsaufbaunachricht zu akzeptieren, und Senden einer Antwort an eine zweite Netzinstanz, um die zweite Netzinstanz zu informieren, die erste Kontaktadresse zu wählen, die mit der ersten IMS-Registrierung assoziiert ist; wobei die erste Sitzungsaufbaunachricht die zweite Kontaktadresse umfasst;
Abstimmen oder Rückkehren, **durch** das ME, zu dem ersten PLMN und Wiederaufnehmen der unterbrochenen ersten Datenverbindung in dem ersten PLMN, wobei die erste Datenverbindung ein erster Träger oder erste Sitzung einer Protokolldateneinheit, PDU, / eines Paketdatenprotokolls, PDP, ist;
Empfangen (S106), **durch** das ME, einer zweiten Sitzungsaufbaunachricht von der zweiten Netzinstanz, die zweite Sitzungsaufbaunachricht umfassend das erste Merkmal-Tag;
wobei sich der erste Zugangstyp von dem zweiten Zugangstyp unterscheidet, sich die erste Kontaktadresse von der zweiten Kontaktadresse unterscheidet und das ME mit mehr als einer SIM versehen ist.

2. Kommunikationsverfahren nach Anspruch 1, wobei die zweite IMS-Registrierung über einen sicheren Tunnel erfolgt, der basierend auf der zweiten Datenverbindung erstellt wird;
wobei der sichere Tunnel unter Verwendung eines Nicht-3GPP-Zugangsmechanismus erstellt wird, der zu einer Non-3GPP InterWorking Function, N3IWF, /einem erweiterten Paketdaten-Gateway, ePDG, in dem ersten PLMN führt.

3. Kommunikationsverfahren nach Anspruch 1, wobei ein Durchführen (S102) der ersten IMS-Registrierung ferner ein Senden einer ersten Register-Kennung, ID, durch das ME umfasst;
ein Durchführen der zweiten IMS-Registrierung ferner ein Senden einer zweiten Register-ID umfasst;
sich die erste Register-ID von der zweiten Register-ID unterscheidet;
wobei die erste Sitzungsaufbaunachricht eine INVITE-Nachricht des Sitzungsinitiierungsprotokolls, SIP, ist;
wobei die Antwort eines oder mehrere von der ersten Register-ID, der ersten Kontaktadresse und dem ersten Merkmal-Tag umfasst.

4. Kommunikationsverfahren nach einem der Ansprüche 1 bis 3, wobei das Kommunikationsverfahren nach Durchführen (S102), durch das ME, der ersten IMS-Registrierung bei der ersten Netzentität und vor Erstellen der zweiten Datenverbindung mit dem zweiten PLMN ferner Folgendes umfasst:
Aussetzen, durch das ME, eines Teils oder aller ersten PDU/PDP-Träger, wobei die ersten PDU/PDP-Träger vor Durchführen, durch das ME, der ersten IMS-Registrierung bei der ersten Netzinstanz erstellt werden;
wobei das Kommunikationsverfahren nach Senden der Antwort an die erste Netzinstanz und vor Empfangen der zweiten Sitzungsaufbaunachricht von der zweiten Netzinstanz ferner Folgendes umfasst:
Wiederaufnehmen, durch das ME, eines der unterbrochenen ersten PDU/PDP-Träger;
wobei das Wiederaufnehmen, durch das ME, eines der unterbrochenen PDU/PDP-Träger ein Wiederaufnehmen, durch das ME, eines der unterbrochenen PDU/PDP-Träger durch Senden einer Nachricht einer Nicht-Zugriffsschicht, NAS, an eine Instanz einer Zugangs- und Mobilitätsmanagementfunktion, AMF, umfasst.

5. Kommunikation nach einem der Ansprüche 1 bis 4, wobei
das Durchführen, durch das ME, der ersten IMS-Registrierung bei der ersten Netzentität Folgendes umfasst:
Empfangen und Speichern, durch das ME, eines ersten Autorisierungs-Tokens oder Ressourcen-Tokens, das mit der ersten IMS-Registrierung von der ersten Netzinstanz assoziiert ist;
das Kommunikationsverfahren ferner Folgendes umfasst:
wenn die erste IMS-Registrierung deregistriert oder aufgefrischt werden muss, Senden, durch das ME, einer zweiten Kommunikationsnachricht über die zweite Datenverbindung an die erste Netzinstanz, wobei die zweite Kommunikationsnachricht mindestens eines von Folgenden umfasst:
das erste Autorisierungs-Token oder Ressourcen-Token,
eine erste Kontaktadresse,
eine erste Register-ID,
eine erste einheitliche Ressourcenkennung, URI,
eine Angabe einer durchzuführenden Aufgabe;
oder
das Durchführen, durch das ME, der zweiten IMS-Registrierung bei der ersten Netzentität Folgendes umfasst:
Empfangen und Speichern, durch das ME, eines zweiten Autorisierungs-Tokens oder Ressourcen-Tokens, das mit der zweiten IMS-Registrierung assoziiert ist;
das Kommunikationsverfahren ferner Folgendes umfasst:
wenn die zweite IMS-Registrierung deregistriert oder aufgefrischt werden muss, Senden, durch das ME, einer dritten Kommunikationsnachricht über die erste Datenverbindung an die erste Netzinstanz, wobei die dritte Kommunikationsnachricht mindestens eines der Folgenden umfasst:
das zweite Autorisierungs-Token oder Ressourcen-Token,
eine zweite Kontaktadresse,
eine zweite Register-ID,
eine erste URI,
eine Angabe einer durchzuführenden Aufgabe,
wobei die Angabe der durchzuführenden Aufgabe eine Auffrischungsaufgabe oder eine Deregistrierungsaufgabe umfasst.

6. Kommunikation nach Anspruch 5, wobei, wenn eine der folgenden Informationen von dem ME empfangen wird: Informationen darüber, dass die erste IMS-Registrierung oder die zweite IMS-Registrierung abgelaufen ist, Informationen darüber, dass die erste IMS-Registrierung oder die zweite IMS-Registrierung nicht existiert, Informationen darüber, dass eine URI nicht mit der ersten Kontaktadresse oder der zweiten Kontaktadresse assoziiert ist, Informationen darüber, dass das ME nicht autorisiert ist, eine Aktion durchzuführen, oder Informationen darüber, dass eine Aktion nicht unterstützt wird, oder wenn ein Timer in dem ME einen bestimmten Wert erreicht,
das Kommunikationsverfahren ferner Folgendes umfasst:
wenn bestimmt wird, dass die zweite IMS-Registrierung aufgefrischt wird, Löschen eines mit der zweiten IMS-Registrierung assoziierten Kontexts durch das ME und erneutes Durchführen einer zweiten IMS-Registrierung bei der ersten Netzinstanz unter Verwendung der zweiten Datenverbindung;
wenn bestimmt wird, dass die erste IMS-Registrierung aufgefrischt werden muss, Löschen eines mit der ersten IMS-Registrierung assoziierten Kontexts durch das ME und erneutes Durchführen einer ersten IMS-Registrierung mit der ersten Netzinstanz unter Verwendung der ersten Datenverbindung;
das erste Autorisierungs-Token einen ersten Wert umfasst, der von der ersten Netzinstanz durch Durchführen einer ersten Berechnung unter Verwendung einer oder mehrerer von der ersten Register-ID, der ersten Kontaktadresse, der ersten URI und eines ersten Schlüssels, der sowohl der ersten Netzinstanz als auch dem ME bekannt ist, erzeugt wird, wobei das Kommunikationsverfahren ferner Folgendes umfasst:
Durchführen der ersten Berechnung durch das ME unter Verwendung mindestens eines von der ersten, der ersten Register-ID, der ersten Kontaktadresse, der ersten URI und dem ersten Schlüssel;
Bestimmen eines ersten Token-Werts; und
Senden des ersten Token-Werts an die erste Netzinstanz durch das ME;
oder das zweite Autorisierungs-Token einen zweiten Wert umfasst, der von der ersten Netzwerkinstanz durch Durchführen einer zweiten Berechnung unter Verwendung der zweiten Register-ID, der zweiten Kontaktadresse, der ersten URI und eines zweiten Schlüssels, der sowohl der ersten Netzwerkinstanz als auch dem ME bekannt ist, erzeugt wird, wobei das Kommunikationsverfahren ferner Folgendes umfasst:
Durchführen der zweiten Berechnung durch das ME unter Verwendung mindestens eines von der zweiten Register-ID, der zweiten Kontaktadresse, der ersten URI und dem zweiten Schlüssel;
Bestimmen, durch das ME, eines zweiten Token-Wertes; und
Senden des zweiten Token-Werts an die erste Netzinstanz durch das ME.

7. Kommunikationsverfahren, umfassend:
Empfangen (S201) einer ersten Nachricht von einem Mobilgerät, ME, durch eine erste Netzinstanz, um eine erste Datenverbindung in einem ersten öffentlichen Mobilfunknetz, PLMN, zu erstellen;
Durchführen, durch die erste Netzinstanz, einer ersten Registrierung eines IP-Multimedia-Subsystems, IMS, über die erste Datenverbindung in dem ersten PLMN, wobei ein Durchführen der ersten IMS-Registrierung Folgendes umfasst: Empfangen eines ersten Merkmal-Tags, das verwendet wird, um einen ersten Zugangstyp der ersten IMS-Registrierung anzugeben, einer ersten privaten Benutzeridentität, die von einem ersten Teilnehmeridentitätsmodul, SIM, des ME erlangt wird, und einer ersten Kontaktadresse an die erste Netzinstanz;
Empfangen (S203) einer zweiten Nachricht von dem ME durch die erste Netzinstanz, um eine zweite Datenverbindung in einem zweiten PLMN zu erstellen;
wobei das Verfahren **gekennzeichnet ist, durch**;
Durchführen einer zweiten IMS-Registrierung über die zweite Datenverbindung des ME **durch** die erste Netzinstanz, wobei ein Durchführen der zweiten IMS-Registrierung ein Empfangen eines zweiten Merkmal-Tags, der verwendet wird, um einen zweiten Zugangstyp der zweiten IMS-Registrierung anzugeben; , der ersten privaten Benutzeridentität und einer zweiten Kontaktadresse von dem ME umfasst, wobei der zweite Merkmal-Tag verwendet wird, um anzugeben, dass die zweite IMS-Registrierung einen Nicht-3GPP-Zugang über eine zelluläre Zugangstechnologie verwendet, oder um anzugeben, dass die zweite Kontaktadresse nur für eine Steuerebenennachricht unter den Steuerebenennachrichten und Medien verwendet werden soll;
Senden einer ersten Kommunikationsnachricht, umfassend das zweite Merkmal-Tag, an das ME **durch** die erste Netzinstanz, wobei die erste Kommunikationsnachricht eine erste Sitzungsaufbaunachricht ist, wobei die erste Sitzungsaufbaunachricht die zweite Kontaktadresse umfasst; und die erste Datenverbindung ein erster Träger oder erste Sitzung einer Protokolldateneinheit, PDU, / eines Paketdatenprotokolls, PDP, ist;
Empfangen (S207) einer Antwort von dem ME **durch** die erste Netzinstanz und Senden der Antwort an eine zweite Netzinstanz; wobei die Antwortnachricht verwendet wird, um die zweite Netzinstanz zu informieren, die erste Kontaktadresse auszuwählen, die mit der ersten IMS-Registrierung assoziiert ist; und
Empfangen einer zweiten Sitzungsaufbaunachricht von der zweiten Netzinstanz; undSenden der zweiten Sitzungsaufbaunachricht **durch** die erste Netzinstanz an das ME (S209), die zweite Sitzungsaufbaunachricht umfassend das erste Merkmal-Tag;
wobei sich der erste Zugangstyp von dem zweiten Zugangstyp unterscheidet, sich die erste Kontaktadresse von der zweiten Kontaktadresse unterscheidet und das ME mit mehr als einer SIM versehen ist.

8. Kommunikationsverfahren nach Anspruch 7, wobei die zweite IMS-Registrierung über einen sicheren Tunnel erfolgt, der basierend auf der zweiten Datenverbindung erstellt wird;
wobei der sichere Tunnel unter Verwendung eines Nicht-3GPP-Zugangsmechanismus erstellt wird, der zu N3IWF/ePDG in dem ersten PLMN führt.

9. Kommunikationsverfahren nach Anspruch 7, wobei
wenn die erste IMS-Registrierung durchgeführt wird, das Kommunikationsverfahren ferner ein Empfangen einer ersten Register-Kennung, ID, von dem ME durch die erste Netzinstanz umfasst;
wenn die zweite IMS-Registrierung durchgeführt wird, das Kommunikationsverfahren ferner ein Empfangen einer zweiten Register-ID umfasst;
sich die erste Register-ID von der zweiten Register-ID unterscheidet;
wobei die Antwort ferner verwendet wird, um anzugeben, dass die erste private Benutzeridentität für die nachfolgende Kommunikation zwischen der zweiten Netzinstanz und dem ME verwendet wird, und die erste Sitzungsaufbaunachricht eine INVITE-Nachricht des Sitzungsinitiierungsprotokolls, SIP, ist.

10. Kommunikationsverfahren nach Anspruch 9, wobei das Kommunikationsverfahren nach Durchführen der ersten IMS-Registrierung und vor Erstellen der zweiten Datenverbindung ferner Folgendes umfasst:
Empfangen einer Aufforderung durch eine dritte Netzinstanz in dem ersten PLMN von dem ME, einen Teil oder alle ersten Träger einer Protokolldateneinheit, PDU / eines Paketdatenprotokolls, PDP, auszusetzen, wobei die ersten PDU-/PDP-Träger vor Durchführen der ersten IMS-Registrierung erstellt werden;
wobei das Kommunikationsverfahren nach Empfangen der Antwort von dem ME durch die erste Netzinstanz und vor Empfangen der zweiten Sitzungsaufbaunachricht von der zweiten Netzinstanz durch das ME ferner Folgendes umfasst:
Empfangen einer Nachricht einer Nicht-Zugriffsschicht, NAS, von einer AMF-Einheit zum Wiederaufnehmen eines der ausgesetzten ersten PDU/PDP-Träger.

11. Kommunikationsverfahren nach einem der Ansprüche 7 bis 10, wobei ein Durchführen der ersten IMS-Registrierung des ME durch die erste Netzinstanz Folgendes umfasst:
Senden eines ersten Autorisierungs-Tokens oder Ressourcen-Tokens, das mit der ersten IMS-Registrierung assoziiert ist, an das ME durch die erste Netzinstanz;
das Kommunikationsverfahren ferner Folgendes umfasst:
wenn die erste IMS-Registrierung deregistriert oder aufgefrischt werden muss, Empfangen einer zweiten Kommunikationsnachricht über die zweite Datenverbindung von dem ME durch die erste Netzinstanz, wobei die zweite Kommunikationsnachricht mindestens eines von Folgenden umfasst:
das erste Autorisierungs-Token oder Ressourcen-Token,
eine erste Kontaktadresse,
die erste Register-ID,
eine erste einheitliche Ressourcenkennung, URI,
eine Angabe einer durchzuführenden Aufgabe;
oder
ein Durchführen der zweiten IMS-Registrierung mit dem ME durch die erste Netzinstanz Folgendes umfasst:
Senden eines zweiten Autorisierungs-Tokens oder Ressourcen-Tokens, das mit der zweiten IMS-Registrierung assoziiert ist, an das ME durch die erste Netzinstanz;
das Kommunikationsverfahren ferner Folgendes umfasst:
wenn die zweite IMS-Registrierung deregistriert oder aufgefrischt werden muss, Empfangen einer dritten Kommunikationsnachricht über die erste Datenverbindung von dem ME durch die erste Netzinstanz, wobei die dritte Kommunikationsnachricht mindestens eines von Folgenden umfasst:
das zweite Autorisierungs-Token oder Ressourcen-Token,
eine zweite Kontaktadresse,
eine zweite Register-ID,
die erste URI, und
eine Angabe einer durchzuführenden Aufgabe.

12. Kommunikationsverfahren nach Anspruch 11, wobei, wenn eine der folgenden Informationen von dem ME empfangen wird: Informationen darüber, dass die erste IMS-Registrierung oder die zweite IMS-Registrierung abgelaufen ist, Informationen darüber, dass die erste IMS-Registrierung oder die zweite IMS-Registrierung nicht existiert, Informationen darüber, dass eine URI nicht mit der ersten IP-Adresse oder der zweiten IP-Adresse assoziiert ist, Informationen darüber, dass das ME nicht autorisiert ist, eine Aktion durchzuführen, oder Informationen darüber, dass eine Aktion nicht unterstützt wird,
das Kommunikationsverfahren ferner Folgendes umfasst:
erneutes Durchführen einer zweiten IMS-Registrierung mit dem ME durch die erste Netzinstanz basierend auf der zweiten Datenverbindung;
das erste Autorisierungs-Token einen ersten Wert umfasst, der von der ersten Netzinstanz durch Durchführen einer ersten Berechnung unter Verwendung einer oder mehrerer von der ersten Register-ID, der ersten Kontaktadresse, einer ersten URI, die mit der ersten IMS-Registrierung assoziiert ist, und eines ersten Schlüssels, der sowohl der ersten Netzinstanz als auch dem ME bekannt ist, erzeugt wird, wobei das Kommunikationsverfahren ferner Folgendes umfasst:
Empfangen eines ersten Token-Werts von dem ME durch die erste Netzinstanz, wobei der erste Token-Wert von dem ME unter Verwendung mindestens einem von der ersten Register-ID, der ersten Kontaktadresse, der ersten URI und dem ersten Schlüssel erzeugt wird;
Vergleichen des ersten Token-Werts mit einem ersten Wert in der ersten Netzinstanz durch die erste Netzinstanz;
und/oder
das zweite Autorisierungs-Token einen zweiten Wert umfasst, der von der ersten Netzwerkinstanz durch Durchführen einer zweiten Berechnung unter Verwendung der zweiten Register-ID, der zweiten Kontaktadresse, der ersten URI und eines zweiten Schlüssels, der sowohl der ersten Netzwerkinstanz als auch dem ME bekannt ist, erzeugt wird, wobei das Kommunikationsverfahren ferner Folgendes umfasst:
Empfangen eines zweiten Token-Werts von dem ME durch die erste Netzinstanz, wobei der zweite Token-Wert von dem ME unter Verwendung mindestens einem von der ersten Register-ID, der ersten Kontaktadresse, der ersten URI und dem zweiten Schlüssel erzeugt wird;
Vergleichen des zweiten Token-Werts mit einem zweiten Wert in der ersten Netzinstanz durch die erste Netzinstanz;

13. Mobilgerät, ME, umfassend:
einen Prozessor (1401), einen Speicher (1402) und ein in dem Speicher (1402) gespeichertes und von dem Prozessor (1401) ausführbares Programm, wobei das Programm von dem Prozessor (1401) ausgeführt wird, um das Kommunikationsverfahren nach einem der Ansprüche 1 bis 6 zu implementieren.

14. Erste Netzinstanz, umfassend:
einen Prozessor (1501), einen Speicher (1502) und ein in dem Speicher (1502) gespeichertes und von dem Prozessor (1501) ausführbares Programm, wobei das Programm von dem Prozessor (1501) ausgeführt wird, um das Kommunikationsverfahren nach einem der Ansprüche 7 bis 12 zu implementieren.

15. Computerlesbares Speichermedium, auf dem ein Programm gespeichert ist, wobei das Programm von einem Prozessor eines Mobilgeräts ME ausgeführt wird, um das Kommunikationsverfahren nach einem der Ansprüche 1 bis 6 zu implementieren, oder das Programm von einem Prozessor einer ersten Netzinstanz ausgeführt wird, um das Kommunikationsverfahren nach einem der Ansprüche 7 bis 12 zu implementieren.

## Revendications

1. Procédé de communication, comprenant :
la génération (S101), par un équipement mobile (ME), d'un premier message pour créer une première connexion de données dans un premier réseau mobile terrestre public (RMTP) ;
l'exécution (S102), par le ME, d'un premier enregistrement IMS (IP Multi-Media Subsystem ou sous-système multimédia IP) par l'intermédiaire de la première connexion de données avec une première entité de réseau dans le premier RMTP, dans lequel l'exécution du premier enregistrement IMS comprend : l'envoi d'une première étiquette de caractéristique utilisée pour indiquer un premier type d'accès du premier enregistrement IMS, une première identité d'utilisateur privé obtenue à partir d'un premier module d'identité d'abonné (SIM, pour Subscriber Identity Module) du ME, et une première adresse de contact à la première entité de réseau ;
la génération (S103), par le ME, d'un deuxième message pour créer une seconde connexion de données dans un second RMTP ;
le procédé étant **caractérisé par** :
l'exécution (S104), par le ME, d'un second enregistrement IMS avec la première entité de réseau par l'intermédiaire de la seconde connexion de données, dans lequel l'exécution du second enregistrement IMS comprend l'envoi d'une seconde étiquette de caractéristique utilisée pour indiquer un second type d'accès du second enregistrement IMS, la première identité de l'utilisateur privé et une seconde adresse de contact à la première entité de réseau, dans lequel la seconde étiquette de caractéristique est utilisée pour indiquer que le second enregistrement IMS utilise un accès non 3GPP par l'intermédiaire d'une technologie d'accès cellulaire ou pour indiquer que la seconde adresse de contact doit être utilisée uniquement pour un message du plan de commande parmi les messages et les supports du plan de commande ;
la réception (S105), par le ME, d'un premier message de communication comprenant la seconde étiquette de caractéristique en provenance de la première entité de réseau ; et
lorsque le premier message de communication est un premier message d'établissement de session, la détermination, par le ME, d'accepter le premier message d'établissement de session, et l'envoi d'une réponse à une deuxième entité de réseau pour demander à la deuxième entité de réseau de choisir la première adresse de contact associée au premier enregistrement IMS ; dans lequel le premier message d'établissement de session comprend la seconde adresse de contact ;
l'accord ou le retour, par le ME, au premier RMTP et la reprise de la première connexion de données suspendue dans le premier RMTP, dans lequel la première connexion de données est une première unité de données de protocole (PDU) / un premier protocole de données par paquets (PDP), un premier support ou une première session ;
la réception (S106), par le ME, d'un second message d'établissement de session en provenance de la deuxième entité de réseau, le second message d'établissement de session comprenant la première étiquette de caractéristique ;
dans lequel le premier type d'accès est différent du second type d'accès, la première adresse de contact est différente de la seconde adresse de contact, et le ME est équipé de plus d'une carte SIM.

2. Procédé de communication selon la revendication 1, dans lequel le second enregistrement IMS est effectué par l'intermédiaire d'un tunnel sécurisé créé sur la base de la seconde connexion de données ;
dans lequel le tunnel sécurisé est créé à l'aide d'un mécanisme d'accès non 3GPP qui va à une fonction d'interfonctionnement non 3GPP (N3IWF)/une passerelle de données par paquets améliorée (ePDG pour enhanced Packet Data Gateway) dans le premier RMTP.

3. Procédé de communication selon la revendication 1, dans lequel l'exécution (S102) du premier enregistrement IMS comprend en outre l'envoi d'un premier identifiant de registre (ID) par le ME ;
l'exécution du second enregistrement IMS comprend en outre l'envoi d'un second ID de registre ;
le premier ID de registre est différent du second ID de registre ;
dans lequel le premier message d'établissement de session est un message INVITE du protocole d'ouverture de session, SIP (pour session initiation protocol) ;
dans lequel la réponse comprend un ou plusieurs éléments parmi le premier ID de registre, la première adresse de contact et la première étiquette de caractéristique.

4. Procédé de communication selon l'une quelconque des revendications 1 à 3, dans lequel après l'exécution (S102), par le ME, du premier enregistrement IMS avec la première entité de réseau, et avant la création de la seconde connexion de données avec le second RMTP, le procédé de communication comprend en outre :
la suspension, par le ME, d'une partie ou de la totalité des premiers supports PDU/PDP, dans lequel les premiers supports PDU/PDP sont créés avant l'exécution, par le ME, du premier enregistrement IMS avec la première entité de réseau ;
dans lequel, après l'envoi de la réponse à la première entité de réseau et avant la réception du second message d'établissement de session de la deuxième entité de réseau, le procédé de communication comprend en outre :
la reprise, par le ME, de tout premier support PDU/PDP suspendu ;
dans lequel, la reprise, par le ME, de tout support PDU/PDP suspendu comprend la reprise, par le ME, de tout support PDU/PDP suspendu en envoyant un message de strate de non-accès (NAS pour Non-Access Stratum) à une entité de la fonction de gestion de l'accès et de la mobilité (AMF, pour Access and Mobility Management Function).

5. Procédé de communication selon l'une quelconque des revendications 1 à 4, dans lequel
l'exécution, par le ME, du premier enregistrement IMS avec la première entité de réseau, comprend :
la réception et le stockage, par le ME, d'un premier jeton d'autorisation ou d'un jeton de ressource associé au premier enregistrement IMS de la part de la première entité de réseau ;
le procédé de communication comprend en outre :
si le premier enregistrement IMS doit être radié ou rafraîchi, l'envoi, par le ME, d'un deuxième message de communication par l'intermédiaire de la seconde connexion de données à la première entité de réseau, dans lequel le deuxième message de communication comprend au moins l'un des éléments suivants :
le premier jeton d'autorisation ou jeton de ressource,
une première adresse de contact,
un premier ID de registre,
un premier identifiant universel de ressource (URI),
une indication d'une tâche à accomplir ;
ou,
l'exécution, par le ME, du second enregistrement IMS avec la première entité de réseau, comprend :
la réception et le stockage, par le ME, d'un second jeton d'autorisation ou jeton de ressource associé au second enregistrement IMS ;
le procédé de communication comprend en outre :
si le second enregistrement IMS doit être radié ou rafraîchi, l'envoi, par le ME, d'un troisième message de communication par l'intermédiaire de la seconde connexion de données à la première entité de réseau, dans lequel le troisième message de communication comprend au moins l'un des éléments suivants :
le second jeton d'autorisation ou jeton de ressource,
une seconde adresse de contact,
un second ID de registre,
un premier URI,
une indication d'une tâche à accomplir,
dans lequel l'indication de la tâche à effectuer comprend une tâche de rafraîchissement ou une tâche de radiation.

6. Procédé de communication selon la revendication 5, dans lequel, si l'une des informations suivantes est reçue par le ME : information sur l'expiration du premier enregistrement IMS ou du second enregistrement IMS, information sur l'inexistence du premier enregistrement IMS ou du second enregistrement IMS, information sur un URI non associé à la première adresse de contact ou à la seconde adresse de contact, information sur l'absence d'autorisation du ME à effectuer une action, ou information sur l'absence de prise en charge d'une action, ou si un temporisateur du ME atteint une valeur spécifique,
le procédé de communication comprend en outre :
si le second enregistrement IMS est déterminé comme étant rafraîchi, la suppression, par le ME, d'un contexte associé au second enregistrement IMS, et la nouvelle exécution d'un second enregistrement IMS avec la première entité de réseau au moyen de la seconde connexion de données ;
si le premier enregistrement IMS est déterminé comme étant rafraîchi, la suppression, par le ME, d'un contexte associé au premier enregistrement IMS, et la nouvelle exécution d'un premier enregistrement IMS avec la première entité de réseau au moyen de la première connexion de données ;
le premier jeton d'autorisation comprend une première valeur générée par la première entité de réseau par l'exécution d'un premier calcul à l'aide d'un ou plusieurs éléments parmi le premier ID de registre, la première adresse de contact, le premier URI et une première clé connue à la fois de la première entité de réseau et du ME, le procédé de communication comprend en outre :
l'exécution du premier calcul par le ME en utilisant au moins l'un des éléments suivants : le premier ID de registre, la première adresse de contact, le premier URI et la première clé ;
la détermination d'une première valeur de jeton ; et
l'envoi de la première valeur de jeton à la première entité de réseau par le ME ;
ou le second jeton d'autorisation comprend une seconde valeur générée par la première entité de réseau par l'exécution d'un second calcul à l'aide d'un ou plusieurs éléments parmi le second ID de registre, la seconde adresse de contact, le premier URI et une seconde clé connue à la fois de la première entité de réseau et du ME, le procédé de communication comprend en outre :
l'exécution du second calcul par le ME en utilisant au moins l'un des éléments suivants : le second ID de registre, la seconde adresse de contact, le premier URI et la seconde clé ;
la détermination, par le ME, d'une seconde valeur de jeton ; et
l'envoi de la seconde valeur de jeton à la première entité de réseau par le ME.

7. Procédé de communication, comprenant :
la réception (S201) d'un premier message d'un équipement mobile (ME), par une première entité de réseau pour créer une première connexion de données dans un premier réseau mobile terrestre public (RMTP) ;
l'exécution, par la première entité de réseau, d'un premier enregistrement IMS (IP Multi-Media Subsystem ou sous-système multimédia IP) par l'intermédiaire de la première connexion de données du ME, dans lequel l'exécution du premier enregistrement IMS comprend : la réception d'une première étiquette de caractéristique utilisée pour indiquer un premier type d'accès du premier enregistrement IMS, une première identité d'utilisateur privé obtenue à partir d'un premier module d'identité d'abonné (SIM, pour Subscriber Identity Module) du ME, et une première adresse de contact à la première entité de réseau ;
la réception (S203) d'un second message du ME par la première entité de réseau pour créer une seconde connexion de données dans un second RMTP ;
le procédé étant **caractérisé par** :
l'exécution d'un second enregistrement IMS par l'intermédiaire de la seconde connexion de données du ME par la première entité de réseau, dans lequel l'exécution du second enregistrement IMS comprend la réception d'une seconde étiquette de caractéristique utilisée pour indiquer un second type d'accès du second enregistrement IMS, la première identité de l'utilisateur privé et une seconde adresse de contact en provenance du ME, dans lequel la seconde étiquette de caractéristique est utilisée pour indiquer que le second enregistrement IMS utilise un accès non 3GPP par l'intermédiaire d'une technologie d'accès cellulaire ou pour indiquer que la seconde adresse de contact doit être utilisée uniquement pour un message du plan de commande parmi les messages et les supports du plan de commande ;
l'envoi d'un premier message de communication comprenant la seconde étiquette de caractéristique au ME par la première entité de réseau, dans lequel le premier message de communication est un premier message d'établissement de session, dans lequel le premier message d'établissement de session comprend la seconde adresse de contact ; et la première connexion de données est une première unité de données de protocole (PDU) / un premier protocole de données par paquets (PDP), un premier support ou une première session ;
la réception (S207) d'une réponse du ME par la première entité de réseau et l'envoi de la réponse à une deuxième entité de réseau ; dans lequel, le message de réponse est utilisé pour demander à la deuxième entité de réseau de choisir la première adresse de contact associée au premier enregistrement IMS ; et
la réception d'un second message d'établissement de session de la part de la deuxième entité de réseau ; etl'envoi, par la première entité de réseau, du second message d'établissement de session au ME (S209), le second message d'établissement de session comprenant la première étiquette de caractéristique ;
dans lequel le premier type d'accès est différent du second type d'accès, la première adresse de contact est différente de la seconde adresse de contact, et le ME est équipé de plus d'une carte SIM.

8. Procédé de communication selon la revendication 7, dans lequel le second enregistrement IMS est effectué par l'intermédiaire d'un tunnel sécurisé créé sur la base de la seconde connexion de données ;
dans lequel le tunnel sécurisé est créé à l'aide d'un mécanisme d'accès non 3GPP qui va à une N3IWF/ePDG dans le premier RMTP.

9. Procédé de communication selon la revendication 7, dans lequel,
lors de l'exécution du premier enregistrement IMS, le procédé de communication comprend en outre la réception d'un premier identifiant de registre, ID, de la part du ME par la première entité de réseau ;
lors de l'exécution du second enregistrement IMS, le procédé de communication comprend en outre la réception d'un second ID de registre ;
le premier ID de registre est différent du second ID de registre ;
dans lequel la réponse est en outre utilisée pour indiquer que la première identité de l'utilisateur privé est utilisée pour les communications ultérieures entre la deuxième entité de réseau et le ME, et que le premier message d'établissement de session est un message INVITE du protocole d'ouverture de session (SIP).

10. Procédé de communication selon la revendication 9, dans lequel, après l'exécution du premier enregistrement IMS et avant la création de la seconde connexion de données, le procédé de communication comprend en outre :
la réception d'une demande par une troisième entité de réseau dans le premier RMTP de la part du ME pour suspendre une partie ou la totalité des premiers supports d'unité de données de protocole (PDU)/de protocole de données par paquets (PDP), dans lequel les premiers supports PDU/PDP sont créés avant l'exécution du premier enregistrement IMS ;
dans lequel, après la réception de la réponse du ME par la première entité de réseau, et avant la réception du second message d'établissement de session de la deuxième entité de réseau par le ME, le procédé de communication comprend en outre :
la réception d'un message de strate de non-accès (NAS pour Non-Access Stratum) par une entité AMF pour reprendre tout premier support PDU/PDP suspendu.

11. Procédé de communication selon l'une quelconque des revendications 7 à 10, dans lequel l'exécution du premier enregistrement IMS du ME par la première entité de réseau comprend :
l'envoi d'un premier jeton d'autorisation ou jeton de ressource associé au premier enregistrement IMS au ME par la première entité de réseau ;
le procédé de communication comprend en outre :
si le premier enregistrement IMS doit être radié ou rafraîchi, la réception d'un deuxième message de communication par l'intermédiaire de la seconde connexion de données du ME par la première entité de réseau, dans lequel le deuxième message de communication comprend au moins l'un des éléments suivants :
le premier jeton d'autorisation ou jeton de ressource,
une première adresse de contact,
le premier ID de registre,
un premier identifiant universel de ressource (URI),
une indication d'une tâche à accomplir ;
ou,
l'exécution du second enregistrement IMS avec le ME par la première entité de réseau, comprend :
l'envoi d'un second jeton d'autorisation ou jeton de ressource associé au second enregistrement IMS au ME par la première entité de réseau ;
le procédé de communication comprend en outre :
si le second enregistrement IMS doit être radié ou rafraîchi, la réception d'un troisième message de communication par l'intermédiaire de la première connexion de données du ME par la première entité de réseau, dans lequel le troisième message de communication comprend au moins l'un des éléments suivants :
le second jeton d'autorisation ou jeton de ressource,
une seconde adresse de contact,
un second ID de registre,
le premier URI, et
une indication d'une tâche à accomplir.

12. Procédé de communication selon la revendication 11, dans lequel, si l'une des informations suivantes est reçue par le ME : information sur l'expiration du premier enregistrement IMS ou du second enregistrement IMS, information sur l'inexistence du premier enregistrement IMS ou du second enregistrement IMS, information sur un URI non associé à la première adresse IP ou à la seconde adresse IP, information sur l'absence d'autorisation du ME à effectuer une action, ou information sur l'absence de prise en charge d'une action,
le procédé de communication comprend en outre :
la nouvelle exécution d'un second enregistrement IMS avec le ME par la première entité de réseau sur la base de la seconde connexion de données ;
le premier jeton d'autorisation comprend une première valeur générée par la première entité de réseau par l'exécution d'un premier calcul à l'aide d'un ou plusieurs éléments parmi le premier ID de registre, la première adresse de contact, un premier URI associé au premier enregistrement IMS, et une première clé connue à la fois de la première entité de réseau et du ME, le procédé de communication comprend en outre :
la réception d'une première valeur de jeton de la part du ME par la première entité de réseau, dans lequel la première valeur de jeton est générée par le ME à l'aide d'au moins l'un des éléments suivants : le premier ID de registre, la première adresse de contact, le premier URI et la première clé ;
la comparaison de la première valeur de jeton à une première valeur dans la première entité de réseau par la première entité de réseau ;
et/ou
le second jeton d'autorisation comprend une seconde valeur générée par la première entité de réseau par l'exécution d'un second calcul à l'aide d'un ou plusieurs éléments parmi le second ID de registre, la seconde adresse de contact, le premier URI et une seconde clé connue à la fois de la première entité de réseau et du ME, le procédé de communication comprend en outre :
la réception d'une seconde valeur de jeton de la part du ME par la première entité de réseau, dans lequel la seconde valeur de jeton est générée par le ME à l'aide d'au moins l'un des éléments suivants : le premier ID de registre, la première adresse de contact, le premier URI et la seconde clé ;
la comparaison de la seconde valeur de jeton à une seconde valeur dans la première entité de réseau par la première entité de réseau.

13. Équipement mobile (ME), comprenant :
un processeur (1401), un stockage (1402) et un programme stocké dans le stockage (1402) et pouvant être exécuté par le processeur (1401), dans lequel le programme est exécuté par le processeur (1401) pour mettre en œuvre le procédé de communication selon l'une quelconque des revendications 1 à 6.

14. Première entité de réseau, comprenant :
un processeur (1501), un stockage (1502) et un programme stocké dans le stockage (1502) et pouvant être exécuté par le processeur (1501), dans lequel le programme est exécuté par le processeur (1501) pour mettre en œuvre le procédé de communication selon l'une quelconque des revendications 7 à 12.

15. Support de stockage lisible par ordinateur stockant un programme, dans lequel le programme est exécuté par un processeur d'un équipement mobile (ME), de manière à mettre en œuvre le procédé de communication selon l'une quelconque des revendications 1 à 6, ou le programme est exécuté par un processeur d'une première entité de réseau de manière à mettre en œuvre le procédé de communication selon l'une quelconque des revendications 7 à 12.
